(19) Europäisches Patentamt
European Patent Office
Office européen des brevets

(11) EP 2 569 344 B1

# (12) EUROPÄISCHE PATENTSCHRIFT

(45) Veröffentlichungstag und Bekanntmachung des Hinweises auf die Patenterteilung:
**23.07.2014 Patentblatt 2014/30**

(21) Anmeldenummer: **11717679.2**

(22) Anmeldetag: **09.05.2011**

(51) Int Cl.:
***C08G 2/00*** (2006.01) ***C08G 61/00*** (2006.01)
***C08G 83/00*** (2006.01) ***C08G 85/00*** (2006.01)
***C08F 20/00*** (2006.01)

(86) Internationale Anmeldenummer:
**PCT/EP2011/057422**

(87) Internationale Veröffentlichungsnummer:
**WO 2011/141424 (17.11.2011 Gazette 2011/46)**

## (54) HERSTELLUNG UND VERWENDUNG VON HYDROXYGRUPPEN UND ACRYLATGRUPPEN AUFWEISENDEN VERZWEIGTEN POLYMEREN

PRODUCTION AND USE OF BRANCHED POLYMERS COMPRISING HYDROXY GROUPS AND ACRYLATE GROUPS

PRODUCTION ET UTILISATION DE POLYMÈRES RAMIFIÉS COMPRENANT DES GROUPES HYDROXY ET DES GROUPES ACRYLATE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **10.05.2010 EP 10162436**

(43) Veröffentlichungstag der Anmeldung:
**20.03.2013 Patentblatt 2013/12**

(73) Patentinhaber: **BASF SE**
**67056 Ludwigshafen (DE)**

(72) Erfinder:
- **KLOK, Harm-Anton**
  **CH-1024 Ecublens (CH)**
- **JI, Sanhao**
  **CH-1022 Chavannes (CH)**
- **BRUCHMANN, Bernd**
  **67251 Freinsheim (DE)**

(56) Entgegenhaltungen:
**US-A1- 2005 277 708 US-A1- 2009 018 300**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung betrifft Hydroxygruppen und Acrylatgruppen aufweisende verzweigte Polymere, Verfahren zu deren Herstellung und deren Verwendung.

Die erfindungsgemäßen Hydroxygruppen und Acrylatgruppen aufweisenden verzweigten Polymere können bevorzugt hergestellt werden über die sogenannte Baylis-Hillman-Reaktion, in der Acrylate und Carbonylverbindungen, bevorzugt Aldehyde, miteinander umgesetzt werden.

US 5,380,901 beschreibt die Reaktion von Acrylaten mit para-Formaldehyd unter Bildung von etherverbrückten Diacrylaten, die Umsetzung von Diacrylaten mit Formaldehyd zu Di-($\alpha$-(1'-Hydroxyalkyl))acrylaten sowie die potentielle Verwendung solcher Monomere in beispielsweise Beschichtungen. Als Härtung wird Massepolymerisation beschrieben.

Die WO 2005/57286 (entspricht US 2007/135556) beschreibt die Umsetzung von Acrylaten mit Formaldehyd zur zusätzlichen Einbringung von Methylolgruppen in ein bestehendes Molekül. Im einzelnen beschrieben wird die Umsetzung von monofunktionellen Acrylaten mit monofunktionellen Carbonylverbindungen, mehrfunktionellen Acrylaten mit monofunktionellen Carbonylverbindungen und monofunktionellen Acrylaten mit mehrfunktionellen Carbonylverbindungen. Die als mehrfunktionelle Carbonylverbindungen eingesetzten Aldehyde können unter anderem Heteroatome in der verbindenden Alkylenkette enthalten.

P. Venkitasubramanian, E. C. Hagberg und P. D. Bloom, Polymer Preprints 2008, 49 (1), 914 bis 915 und US 2009/0018300 beschreiben die Herstellung von biobasierten Polymeren auf Basis eines Monomeren, das eine Aldehyd- und eine Acrylatgruppe aufweist, aus der Reaktion von 5-Hydroxymethylfurfural und Acryloylchlorid oder Acrylsäuremethylester. Dieses Monomer wird mittels der Baylis-Hillman-Reaktion polymerisiert.

US 2009/0018300 offenbart in den lediglich "prophetischen Beispielen" 19 bis 23 die hypothetische Herstellung linearer Polymer durch eine Baylis-Hillman Reaktion auf der Basis von Diformylfuran und einem auf Furan bzw. Isosorbit basierenden Diacrylat. Da diese hypothetischen Beispiele basierend auf nachwachsenden biologischen Materialien hergestellt werden, ist auch für die hypothetischen Produkte mit einer Bioabbaubarkeit, also verminderter Stabilität zu rechnen. Zudem sind die Monomere der "prophetischen Beispiele" technisch nicht verfügbar und deren Herstellung aufwendig.

Verzweigte Polymere sind nicht erwähnt.

Aus der Internationalen Anmeldung WO 2011/006947 ist bekannt, Hydroxygruppen und Acrylatgruppen aufweisende lineare Polymere herzustellen, indem man Dicarbonylverbindungen und Diacrylatverbindungen miteinander umsetzt.

Verzweigte Polymere sind nicht erwähnt.

Aufgabe der vorliegenden Erfindung war es daher, neue Hydroxygruppen und Acrylatgruppen aufweisende Polymere zu entwickeln, die entweder als solche verwendet werden können oder als Komponenten für radikalisch polymerisierbare, bevorzugt strahlungshärtbare Systeme, für über Polyaddition oder Polykondensation härtbare Systeme oder für radikalisch, bevorzugt strahlungshärtbare und über Polyaddition oder Polykondensation härtbare Systeme, sogenannte Multi-, bevorzugt Dual Cure Systeme. Die Polymere sollen eine verbesserte Stabilität erwarten lassen als die im Stand der Technik bekannten, durch eine Baylis-Hillman herstellbaren linearen Polymere.

Die Aufgabe wird gelöst durch Hydroxygruppen und Acrylatgruppen aufweisende verzweigte Polymere (S), erhältlich durch Reaktion mindestens einer Carbonylverbindung (A), ausgewählt aus der Gruppe bestehend aus

- Carbonylverbindungen (Ax) mit mehr als zwei Carbonylgruppen und,
- Dicarbonylverbindungen (A2) mit genau zwei Carbonylgruppen, wobei die Carbonylgruppen sowohl in (A2) als auch in (Ax) jeweils unabhängig voneinander ausgewählt sind aus der Gruppe bestehend aus

    - - Aldehydgruppen und
    - - Ketogruppen

  und

  mindestens einer Acrylatverbindung (B), ausgewählt aus der Gruppe bestehend aus
- Acrylatverbindungen (By) mit mehr als zwei Acrylatgruppen und
- Diacrylatverbindungen (B2),

mit der Maßgabe, daß die mittlere Funktionalität der Carbonylgruppen-enthaltenden Verbindungen (A) und/oder die mittlere Funktionalität der Acrylatgruppen-enthaltenden Verbindungen (B) mehr als 2 beträgt.

Die mittlere Funktionalität der Verbindungen mit den jeweiligen funktionellen Gruppen ist dabei definiert als die Summe der Molenbrüche der jeweiligen Verbindungen multipliziert mit deren jeweiliger Funktionalität.

Wir beispielsweise ein Gemisch von 0,6 mol eines Diacrylats mit 0,3 mol eines Triacrylats und 0,1 mol eines Tetraacrylats eingesetzt, so ergibt sich die mittlere Funktionalität als $0,6 \times 2 + 0,3 \times 3 + 0,1 \times 4 = 2,5$.

Die Baylis-Hillman Reaktion beinhaltet die Kondensation eines elektronenarmen Alkens und eines Aldehyds, katalysiert beispielsweise durch ein tertiäres Amin oder Phosphin. Das Baylis-Hillman Addukt, ein α-Methylen-β-hydroxy Carbonylderivat, ist eine interessante und wichtige Substruktur, die häufig in natürlichen und synthetischen Produkten von biologischem und medizinischem Interesse auftritt. Der typische Baylis-Hillman Reaktion verwendet nukleophile und nicht-gehinderte tertiäre Amine als Katalysatoren, wie beispielsweise 1,4-Diazabicyclo[2.2.2]octan (DABCO).

Radikalisch härtbare Systeme sind polymerisierbare Zusammensetzungen, die sich über radikalisch initiierte Polymerisation härten lassen. Eine solche Initiierung kann beispielsweise über Peroxide, Azoverbindungen oder Sauerstoff erfolgen.

Beispiele für thermisch aktivierbare Initiatoren sind, z.B. Kaliumperoxodisulfat, Dibenzoylperoxid, Cyclohexanonperoxid, Di-tert.-Butylperoxid, Cyclohexylsulfonylacetylperoxid, Di-*iso*-propylpercarbonat, *tert*-Butylperoktoat oder Benzpinakol, Di-t-Butylperoxid, Cumolhydroperoxid, Dicumylperoxid, t-Butylperbenzoat, Azobis-*iso*-butyronitril, silylierte Pinakole, die z. B. unter dem Handelsnamen ADDID 600 der Firma Wacker kommerziell erhältlich sind oder Hydroxylgruppen-haltige Amin-N-Oxide, wie 2,2,6,6-Tetramethylpiperidin-N-oxyl, 4-Hydroxy-2,2,6,6-Tetramethylpiperidin-N-oxyl etc.

Weitere Beispiele geeigneter Initiatoren sind in "Polymer Handbook", 2. Aufl., Wiley & Sons, New York beschrieben.

Strahlungshärtung im Sinne dieser Schrift ist definiert als die Polymerisation von polymerisierbaren Verbindungen infolge einer elektromagnetischen und/oder korpuskularen Strahlung, bevorzugt UV-Licht im Wellenlängenbereich von $\lambda$=200 bis 700 nm, aber auch IR oder NIR-Strahlung, und/oder Elektronenstrahlung im Bereich von 150 bis 300 keV und besonders bevorzugt mit einer Strahlungsdosis von mindestens 80, bevorzugt 80 bis 3000 $mJ/cm^2$.

Mit dem Begriff "Dual Cure" beziehungsweise "Multi Cure" ist im Rahmen dieser Schrift ein Härtungsprozeß bezeichnet, der über zwei beziehungsweise mehr als zwei Mechanismen erfolgt und zwar beispielsweise ausgewählt aus strahlungs-, feuchtigkeits-, chemisch, oxidativ und/oder thermisch härtend, bevorzugt ausgewählt aus strahlungs-, feuchtigkeits-, chemisch und/oder thermisch härtend, besonders bevorzugt ausgewählt aus strahlungs-, chemisch und/oder thermisch härtend und ganz besonders bevorzugt strahlungs- und chemisch härtend.

Polyaddition im Sinne dieser Schrift ist definiert als die Polymerisation von polymerisierbaren Verbindungen ohne Abspaltung kleinerer Moleküle infolge einer Reaktion von beispielsweise Hydroxygruppen (-OH), Mercaptogruppen (-SH), Carboxygruppen (-COOH) oder Aminogruppen (-NRH), bevorzugt Hydroxy- oder Carboxygruppen, besonders bevorzugt Hydroxygruppen, mit gegenüber Hydroxy- , Mercapto-, Carboxy- oder Aminogruppen reaktiven Gruppen, beispielsweise Isocyanaten, verkappten Isocyanaten, Epoxiden, cyclischen Carbonaten oder Aminoplasten, bevorzugt Isocyanaten, Epoxiden oder Aminoplasten, besonders bevorzugt Isocyanaten oder Epoxiden und ganz besonders bevorzugt Isocyanaten.

Weiterhin sei damit auch die Reaktion an Doppelbindungen mit Verbindungen, die an die Doppelbindungen addierbare Gruppen enthalten, umfaßt, namentlich genannt sei die Michael-Addition. Zu nennen sind hier besonders primäre oder sekundäre Aminogruppen.

Polykondensation im Sinne dieser Schrift ist definiert als die Polymerisation von polymerisierbaren Verbindungen unter Abspaltung kleinerer Moleküle infolge einer Reaktion von beispielsweise Hydroxygruppen (-OH), Mercaptogruppen (-SH) oder Aminogruppen (-NRH) mit gegenüber Hydroxy- , Mercapto- oder Aminogruppen reaktiven Gruppen, beispielsweise Carbonsäuren oder deren Derivaten, Sulfonsäuren oder deren Derivaten, Carbonaten, bevorzugt Carbonsäuren und deren Derivaten oder Carbonaten, besonders bevorzugt Carbonsäuren, Carbonsäurehalogenide und Carbonsäureanhydride.

Zur Herstellung der erfindungsgemäßen verzweigten Polymere (S) ist es erforderlich, daß man mindestens eine mehr als difunktionelle Carbonylverbindung (Ax) und/oder mindestens eine mehr als difunktionelle Acrylatverbindung (By) miteinander umsetzt.

Optional kann man zusätzlich mindestens eine difunktionelle Carbonylverbindung (A2) und/oder mindestens eine difunktionelle Acrylatverbindung (B2) umsetzen.

Folgende Umsetzungsmöglichkeiten führen zu den erfindungsgemäßen Polymeren (S):

- 1) mindestens eine Verbindung (Ax) und mindestens eine Verbindung (By),
- 2) mindestens eine Verbindung (Ax) und mindestens eine Verbindung (B2),
- 3) mindestens eine Verbindung (A2) und mindestens eine Verbindung (By),
- 4) mindestens eine Verbindung (Ax) und mindestens eine Verbindung (By) und mindestens eine Verbindung (A2),
- 5) mindestens eine Verbindung (Ax) und mindestens eine Verbindung (By) und mindestens eine Verbindung (B2),

- 6) mindestens eine Verbindung (Ax) und mindestens eine Verbindung (B2) und mindestens eine Verbindung (A2),
- 7) mindestens eine Verbindung (By) und mindestens eine Verbindung (A2) und mindestens eine Verbindung (B2),
- 8) mindestens eine Verbindung (Ax) und mindestens eine Verbindung (By) und mindestens eine Verbindung (A2),
- 9) mindestens eine Verbindung (Ax) und mindestens eine Verbindung (By) und mindestens eine Verbindung (A2) und mindestens eine Verbindung (B2).

Unter diesen sind die Reaktionsmöglichkeiten 3) und 7) bevorzugt, besonders bevorzugt ist die Reaktionsmöglichkeit 7), bei der mindestens eine Verbindung (By) und mindestens eine Verbindung (A2) und mindestens eine Verbindung (B2) miteinander umgesetzt werden.

Die mindestens eine Carbonylverbindung (Ax) mit mehr als zwei Carbonylgruppen weist im statistischen Mittel mehr als zwei Carbonylgruppen auf, bevorzugt mindestens 3, besonders bevorzugt 3 bis 6, ganz besonders bevorzugt 3 bis 5, insbesondere 3 bis 4 und speziell 3.

Dabei kann es sich um mindestens eine, beispielsweise ein bis vier, bevorzugt ein bis drei, besonders bevorzugt ein bis zwei und ganz besonders bevorzugt genau eine Verbindung (Ax) handeln.

Darin sind die Carbonylgruppen ausgewählt aus der Gruppe bestehend aus

- - Aldehydgruppen und
- - Ketogruppen,

bevorzugt handelt es sich entweder um mehr als difunktionelle Ketone oder um mehr als difunktionelle Aldehyde, besonders bevorzugt um ausschließlich Aldehydgruppen aufweisende Verbindungen.

Diese funktionellen Gruppen können dabei in beliebiger Weise miteinander verbunden sein, beispielsweise durch aromatische, aliphatische, cycloaliphatische oder heteroaromatische Gruppen oder Kombinationen davon, bevorzugt durch aromatische oder aliphatische Gruppen.

Bevorzugte Verbindungen (Ax) sind beispielsweise mit drei Aldehydgruppen substituierte Aromaten, wie 1,2,3-, 1,2,4- oder 1,3,5-Benzoltrialdehyd, 2,4,6-Pyridintrialdehyd, oder Hydroformylierungsprodukte von Alkanpolyenen mit einer entsprechenden Anzahl von C=C-Doppelbindungen, bevorzugt Alkantrienen. Die mittlere Anzahl der Aldehydgruppen im Gemisch ist durch die Anzahl der C=C-Doppelbindungen und Hydroformylierung steuerbar. Derartige Produkte sind beispielsweise beschrieben in WO 98/28252, dort besonders von Seite 3, Zeile 36 bis Seite 11, Zeile 44 sowie den darin beschriebenen Beispielen 1 bis 9.

Eine besonders bevorzugte Verbindung (Ax) ist 1,3,5-Benzoltrialdehyd.

Als Einsatzstoffe für die Reaktion werden optional mindestens eine, beispielsweise ein bis vier, bevorzugt ein bis drei, besonders bevorzugt ein bis zwei und ganz besonders bevorzugt genau eine difunktionelle Carbonylverbindung (A2) mit der obigen Maßgabe eingesetzt.

Die reaktiven Gruppen der Dicarbonylverbindung (A2) mit genau zwei Carbonylgruppen ist ausgewählt aus der Gruppe bestehend aus

- - Aldehydgruppen (A2a) und
- - Ketogruppen (A2b).

Unter den Verbindungen (A2) sind Diketone und Dialdehyde bevorzugt, besonders bevorzugt handelt es sich bei der Verbindung (A2) um einen Dialdehyd.

Bevorzugt sind in der Verbindung (A2) die zwei Carbonylgruppen durch einen aliphatischen, cycloaliphatischen oder aromatischen Kohlenwasserstoffrest miteinander verbunden.

Bevorzugt handelt es sich bei den Dialdehyden als Verbindungen (A2) um Verbindungen der Formel

$$OHC\text{-}R^1\text{-}CHO,$$

worin
$R^1$ einen zweibindigen heteroaromatischen oder aliphatischen, cycloaliphatischen oder aromatischen Kohlenwasserstoffrest oder eine Einfachbindung bedeutet.
$R^1$ bedeutet bevorzugt unsubstituiertes oder mit Halogen, $C_1$-$C_8$-Alkyl, $C_2$-$C_8$-Alkenyl, Carboxy, Carboxy-$C_1$-$C_8$-Alkyl, $C_1$-$C_{20}$-Acyl, $C_1$-$C_8$-Alkoxy, $C_6$-$C_{12}$-Aryl substituiertes $C_6$-$C_{12}$-Arylen, $C_3$-$C_{12}$-Cycloalkylen, $C_1$-$C_{20}$-Alkylen oder Heteroarylen oder eine Einfachbindung. Besonders bevorzugt handelt es sich um unsubstituiertes $C_6$-$C_{12}$-Arylen, $C_3$-$C_{12}$-Cycloalkylen, $C_1$-$C_{20}$-Alkylen oder eine Einfachbindung. Ganz besonders bevorzugt handelt es sich um unsubstituiertes

$C_6$-$C_{12}$-Arylen, $C_2$-$C_{20}$-Alkylen oder eine Einfachbindung.

Darin bedeuten $C_1$ - $C_{20}$-Alkylen lineares oder verzweigtes Alkylen, z.B. Methylen, 1,2-Ethylen, 1,2- oder 1,3-Propylen, 1,2-, 1,3- oder 1,4-Butylen, 1,1-Dimethyl-1,2-ethylen, 1,2-Dimethyl-1,2-ethylen, 1,5-Pentylen, 1,6-Hexylen, 1,8-Octylen, 1,10-Decylen oder 1,20-Eicosylen.

$C_3$ - $C_{12}$-Cycloalkylen beispielsweise Cyclopropylen, Cyclopentylen, Cyclohexylen, Cyclooctylen oder Cyclododecylen.

$C_6$-$C_{12}$-Arylen bedeutet beispielsweise Phenylen, Naphthylen oder Biphenylen.

Heteroarylen bedeutet beispielsweise ein zweibindiger Rest, der entsteht durch gedankliche Abstraktion zweier Wasserstoffatome aus einem mindestens ein Stickstoffatom, Sauerstoffatom und/oder Schwefelatom enthaltenden, bevorzugt fünf- oder sechsgliedrigen aromatischen Ring, besonders bevorzugt ausgewählt aus der Gruppe bestehend aus Thiophen, Furan, Pyrrol und Pyridin.

Bevorzugte Reste $R^1$ sind eine Einfachbindung, Methylen, 1,2-Ethylen, 1,3-Propylen, 1,2-Propylen, 1,4-Butylen, 1,5-Pentylen, 1,6-Hexylen, 1,2-Phenylen, 1,3-Phenylen, 1,4-Phenylen, 2,3-Toluylen, 2,4-Toluylen, 2,6-Toluylen, 1,2-Cyclohexylen, 1,3-Cyclohexylen und 1,4-Cyclohexylen.

Besonders bevorzugte Reste $R^1$ sind eine Einfachbindung, 1,2-Ethylen, 1,3-Propylen, 1,4-Butylen, 1,3-Phenylen und 1,4-Phenylen.

Bevorzugte Verbindungen (A2) sind Glyoxal, Succinaldehyd, Glutaraldehyd, Capronaldehyd, Furan-2,5-dialdehyd, Pyrrol-2,5-dialdehyd, Pyridin-2,6-dialdehyd, Phthalaldehyd, Isophthalaldehyd und Terephthalaldehyd, besonders bevorzugt sind Glyoxal, Succinaldehyd, Glutaraldehyd, Isophthalaldehyd und Terephthalaldehyd.

Die mindestens eine Acrylatverbindung (By) mit mehr als zwei Acrylatgruppen weist im statistischen Mittel mehr als zwei Acrylatgruppen auf, bevorzugt mindestens 3, besonders bevorzugt 3 bis 8, ganz besonders bevorzugt 3 bis 6, insbesondere 3 bis 4 und speziell 3.

Dabei kann es sich um mindestens eine, beispielsweise ein bis vier, bevorzugt ein bis drei, besonders bevorzugt ein bis zwei und ganz besonders bevorzugt genau eine Verbindung (By) handeln.

Bei den Acrylatverbindungen (By) kann es sich beispielsweise handeln um Acrylsäureester von Polyalkoholen, wie Polyolen, Polyetherolen, Polyesterolen oder Polyacrylatpolyolen, mit der entsprechenden Funktionalität. Somit können geeignete Verbindungen (By) Polyetheracrylate, Polyesteracrylate, acrylierte Polyacrylatole oder Urethanacrylate mit der gewünschten Funktionalität größer 2 sein.

Bevorzugt handelt es sich bei den Acrylatverbindungen (By) um Acrylsäureester von Polyolen mit einer Funktionalität größer 2, wobei es sich bei den Polyolen bevorzugt um optional alkoxylierte Alkanpolyole handeln kann.

Geeignete Alkylenoxide für eine solche Alkoxylierung sind beispielsweise Ethylenoxid, Propylenoxid, *n*-Butylenoxid, *iso*-Butylenoxid, Vinyloxiran und/oder Styroloxid.

Die Alkylenoxidkette kann bevorzugt aus Ethylenoxid-, Propylenoxid- und/oder Butylenoxideinheiten zusammengesetzt sein. Eine solche Kette kann sich aus einer Spezies eines Alkylenoxides oder aus einem Gemisch von Alkylenoxiden zusammensetzen. Wird ein Gemisch verwendet, können die unterschiedlichen Alkylenoxideinheiten statistisch oder als Block oder Blöcke einzelner Spezies vorliegen. Bevorzugt ist als Alkylenoxid Ethylenoxid, Propylenoxid oder ein Gemisch daraus, besonders bevorzugt ist entweder Ethylenoxid oder Propylenoxid und ganz besonders bevorzugt Ethylenoxid.

Die Anzahl der Alkylenoxideinheiten in der Kette beträgt beispielsweise 1 bis 20, bevorzugt 1 bis 10, besonders bevorzugt 1 - 5 und insbesondere 1 - 3 und außergewöhnlich bevorzugt 1, bezogen auf die jeweiligen Hydroxygruppen des Polyalkohols.

Besonders bevorzugt sind optional alkoxylierte Polyole der Formeln (IIa) bis (IIc),

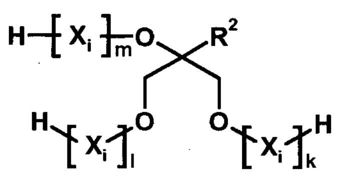

(IIa)

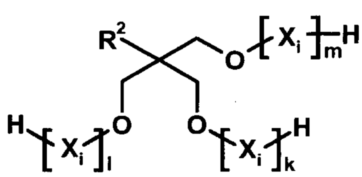

(IIb)

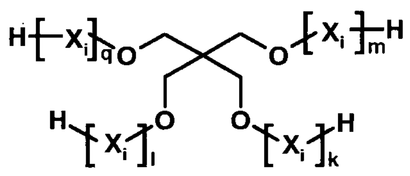

(IIc)

worin

$R^2$ Wasserstoff oder $C_1$ - $C_{18}$-Alkyl,

k, l, m, q unabhängig voneinander je für eine ganze Zahl von 0 bis 10, bevorzugt 0 bis 5, besonders bevorzugt 0 bis 3, ganz besonders bevorzugt für 0 bis 2, insbesondere für 0 oder 1 und speziell für 0 steht und

jedes $X_i$ für i = 1 bis k, 1 bis l, 1 bis m und 1 bis q unabhängig voneinander ausgewählt sein kann aus der Gruppe

$-CH_2-CH_2-O-$, $-CH_2-CH(CH_3)-O-$, $-CH(CH_3)-CH_2-O-$, $-CH_2-C(CH_3)_2-O-$, $-C(CH_3)_2-CH_2-O-$, $-CH_2-CHVin-O-$, $-CHVin-CH_2-O-$, $-CH_2-CHPh-O-$ und $-CHPh-CH_2-O-$, bevorzugt aus der Gruppe $-CH_2-CH_2-O-$, $-CH_2-CH(CH_3)-O-$ und $-CH(CH_3)-CH_2-O-$, und besonders bevorzugt $-CH_2-CH_2-O-$,
worin Ph für Phenyl und Vin für Vinyl steht.

Bevorzugt handelt es sich dabei um Acrylate von ein- bis zwanzigfach und besonders bevorzugt drei- bis zehnfach ethoxyliertem, propoxyliertem oder gemischt ethoxyliertem und propoxyliertem und insbesondere ausschließlich ethoxyliertem oder speziell unalkoxyliertem Glycerin, Trimethylolpropan, Trimethylolethan oder Pentaerythrit.

Weiterhin denkbare Verbindungen (By) sind Di-Trimethylolpropantetraacrylat und DiPentaerythrithexaacrylat oder Sorbitol-basierende Acrylate.

Bevorzugte Verbindungen (By) sind Trimethylolpropantriacrylat, Pentaerythrittetraacrylat, Glycerintriacrylat und Triacrylat von ein- bis zwanzigfach ethoxyliertem Trimethylolpropan, Glycerin oder Pentaerythrit.

Besonders bevorzugte Verbindungen sind Trimethylolpropantriacrylat und Pentaerythrittetraacrylat.

Als weiterer Einsatzstoff können optional mindestens ein, beispielsweise ein bis vier, bevorzugt ein bis drei, besonders bevorzugt ein bis zwei und ganz besonders bevorzugt genau ein difunktionelles Acrylat (B2) eingesetzt werden.

Bei der Diacrylatverbindung (B2) handelt es sich um beliebige difunktionelle Acrylate, bevorzugt um Diacrylate von Alkandiolen oder Cycloalkandiolen sowie niederen Polyalkylenglykolen, bevorzugt Polyethylenglykolen oder Polypropylenglykolen, oder - wenn auch weniger bevorzugt - difunktionelle Acrylamide von Diaminen, vorzugsweise von linearen oder verzweigten aliphatischen oder cycloaliphatischen Diaminen.

Bevorzugt handelt es sich bei den Verbindungen (B2) um solche mit einem Molekulargewicht unter 400 g/mol, besonders bevorzugt um strukturell einheitliche Verbindungen, d.h. solche, die keine Molekulargewichtsverteilung aufweisen.

Bei den Alkandiolen kann es sich bevorzugt handeln um Ethylenglykol, 2,2-Dimethyl-1,2-Ethandiol, 1,3-Propandiol, 1,2-Propandiol, 1,2-Butandiol, 1,3-Butandiol, 1,4-Butandiol, 3-Methylpentan-1,5-diol, 2-Ethylhexan-1,3-diol, 2,4-Diethyloctan-1,3-diol, 1,6-Hexandiol, Neopentylglykol, 2-Ethyl-1,3-Propandiol oder 2-Methyl-1,3-Propandiol.

Bei den Cycloalkandiolen kann es sich bevorzugt handeln um 2,2-Bis(4-hydroxycyclohexyl)propan, 1,1-, 1,2-, 1,3- und 1,4-Cyclohexandimethanol, 1,2-, 1,3- oder 1,4-Cyclohexandiol.

Bei den Polyalkylenglykolen kann es sich bevorzugt handeln um Polyethylenglykole, Polypropylenglykole, Poly-THF oder Poly-1,3-propandiol. Besonders bevorzugt sind Polyethylenglykole oder Polypropylenglykole als Gemisch der Isomere. Unter den Polyalkylenglykolen sind Di- bis Pentamere bevorzugt.

Bei den Diaminen handelt es sich bevorzugt um lineare oder verzweigte aliphatische oder cycloaliphatische primäre und/oder sekundäre Diamine, wie zum Beispiel 1,2-Diaminoethan, 1,2- oder 1,3-Diaminopropan; 1,4-Diaminobutan, 1,5-Diaminopentan, 1,6-Diaminohexan, 1,7-Diaminoheptan, 1,8-Diaminooktan, 1,9-Diaminononan, 1,10-Diaminodekan, 1,12-Diaminododecan oder Piperazin.

Besonders bevorzugte Diacrylate (B2) sind Ethylenglykoldiacrylat, 1,2-Propandioldiacrylat, 1,3-Propandioldiacrylat, 1,3-Butandioldiacrylat, 1,4-Butandioldiacrylat, 1,6-Hexandioldiacrylat, Diethylenglykoldiarylat, Dipropylenglykoldiacrylat, Tripropylenglykoldiacrylat, N,N'-Bisacryloyl-1,2-diaminoethan, N,N'-Bisacryloyl-1,6-diaminohexan oder N,N'-Bisacryloyl-piperazin.

Ganz besonders bevorzugte Verbindungen sind 1,6-Hexandioldiacrylat und Dipropylenglykoldiacrylat.

Die Durchführung der Baylis-Hillman-Reaktion ist dem Fachmann an sich bekannt und Gegenstand mehrerer Literaturüberblicke.

Die Reaktion kann bei einer Temperatur zwischen 0 °C und 100 °C, bevorzugt 20 bis 80 °C und besonders bevorzugt 25 °C bis 60 °C durchgeführt werden.

Um Ketone zur Reaktion zu bringen kann es erforderlich sein, hohen Druck anzulegen.

Als Katalysator für die Reaktion wird zumeist ein tertiäres Amin oder Phosphin verwendet, beispielsweise Trimethylamin, Triethylamin, Tri-n-butylamin, Ethyl-di-*iso*-Propylamin, Methyl-di-*iso*-Propylamin, N-Methylmorpholin, N-Methylpiperidin, Triethanolamin, N,N-Dimethylethanolamin, 4-Dimethylaminopyridin, Diazabicyclooctan, 1,5-Diazabicyclo[4.3.0]-non-5-en (DBN), 1,8-Diazabicyclo[5.4.0]-undec-7-en (DBU), Pyrrocolin, Chinuclidin, Chinidin, Trimethylphosphin, Triethylphosphin, Tri-n-Butylphosphin, Dimethylphenylphosphin und bevorzugt 1,4-Diaza-bicyclo[2,2,2]octan (DABCO). Der Katalysator wird in der Regel in Mengen von 1 bis 100 mol% bzgl. Acrylgruppen eingesetzt, bevorzugt 2 - 50, besonders bevorzugt 3 - 40 und ganz besonders bevorzugt 5-30 mol%.

Die Stöchiometrie zwischen Acrylatgruppen enthaltenden Monomeren, in Summe enthalten in den Verbindungen (Ax) und optional (A2), und Carbonylgruppen enthaltenden Monomeren, in Summe enthalten in den Verbindungen (By) und optional (B2), beträgt in der Regel molar 1 : 0,05 - 1,5, bevorzugt 1 : 0,1 - 1,3, besonders bevorzugt 1 : 0,2 - 1,0 und ganz besonders bevorzugt 1 : 0,4 - 1,0.

Das molare Verhältnis von mehr als difunktionellen Verbindungen (Ax) und (By) in Summe zur Summe der difunktionellen Verbindungen (A2) und (B2) beträgt in der Regel von 1 : 0 - 5, bevorzugt von 1 : 0,1 bis 4, besonders

bevorzugt von 1 : 0,25 bis 3, ganz besonders bevorzugt von 1 : 0,5 bis 2 und insbesondere 1 : 0,8 - 1,5.

Die erfindungsgemäß erhältlichen Polymere zeichnen sich gegenüber den aus dem Stand der Technik erhältlichen Polymeren dadurch aus, daß sie verzweigt sind, wohingegen sich nach den Verfahren aus dem Stand der Technik lediglich lineare Polymere ergeben.

Dies hat zur Folge, daß eine höhere Vernetzungsdichte erzielt werden kann und somit mit den erfindungsgemäßen Polymeren erhaltene Beschichtungen eine höhere Härte und/oder Kratzfestigkeit aufweisen.

Der Verzweigungsgrad (Degree of Branching, DB) eines Polymers berechnet sich wie offenbart in H. Frey et al., Acta Polym. 1997, 48, 30-35, siehe dort Formel (1).

Gemäß Formel (1) von Frey et al. ist der Verzweigungsgrad definiert als

$$DB\,[\%] = (D + T) / (D + L + T), \text{ multipliziert mit } 100$$

worin

D, T und L jeweils die Anteile von verzweigenden, terminalen oder linear eingebauten Monomereinheiten im Polymer sind.

Die erfindungsgemäß erhältlichen Polymere weisen in der Regel einen Verzweigungsgrad von mindestens 5% auf, bevorzugt von mindestens 10%, besonders bevorzugt von mindestens 15%, ganz besonders bevorzugt mindestens 20% und insbesondere mindestens 25%.

Der Verzweigungsgrad läßt sich beispielsweise per NMR-Analytik auf Basis von Modellsubstanzen bestimmen.

Ein erfindungsgemäß erhältliches Polymer mit einem ideal verzweigten Aufbau ohne lineare Anteile weist einen Verzweigungsgrad von 100% auf; bevorzugt sind die erfindungsgemäßen Polymere erhältlich als verzweigte oder hochverzweigte Polymere mit einem Verzweigungsgrad bis zu 99,9%, besonders bevorzugt bis zu 99%, ganz besonders bevorzugt bis zu 98% und insbesondere bis zu 95%.

Als Lösungsmittel für die Baylis-Hillman Reaktion können bevorzugt Wasser, Petrolether, Ligroin, Toluol, Benzol, Xylol, Tetrahydrofuran (THF), Diethylether, Dioxan, ein Methacrylat oder aber auch das zur Reaktion verwendete Acrylat eingesetzt werden. Die Reaktion kann auch in Abwesenheit eines Lösungsmittels durchgeführt werden.

Wird ein Methacrylat oder das an der Reaktion beteiligte Acrylat (im folgenden als (Meth)acrylat bezeichnet) als Lösungsmittel verwendet, so kann das entstehende Reaktionsgemisch, das sowohl das verwendete (Meth)acrylat als auch erfindungsgemäßes Polymer enthält, aufgereinigt oder ohne Abtrennung des (Meth)acrylats als solches eingesetzt werden, wobei das (Meth)acrylat dann als Reaktivverdünner oder multifunktionelles (Meth)acrylat (siehe unten) fungiert.

Auf eine Aufreinigung des Reaktionsgemisches kann verzichtet werden, selbstverständlich kann das Gemisch natürlich auch durch Destillation, Strippen, saure, alkalische oder neutrale Wäsche, Filtration, durch Behandlung mit Ionentauschern oder dergleichen gereinigt werden.

Die erfindungsgemäßen Polymere weisen in der Regel ein zahlenmittleres Molekulargewicht Mn von 312 bis 20000, bevorzugt von 400 bis 10000 und besonders bevorzugt von 500 bis 5000 g/mol und ein gewichtsmittleres Molekulargewicht Mw von 312 bis 50000, bevorzugt von 400 bis 30000 und besonders bevorzugt von 500 bis 20000 auf. Die Molekulargewichte können bestimmt werden bei Oligomeren durch Ermittlung des Polymerisationsgrades und anschließender Molekulargewichtsberechnung aus den Einzelgewichten der Monomere oder bei Polymeren durch Gelpermeationschromatographie mit einem geeigneten Polymerstandard und Tetrahydrofuran oder Dimethylformamid als Elutionsmittel.

Die erfindungsgemäßen Polymere sind in der Regel farblos bis bernsteinfarben gefärbt und lösen sich gut in Lösemitteln, wie Methanol, Ethanol, Dimethylformamid, Dimethylacetamid, Essigester, Butylacetat, Tetrahydrofuran, Aceton, 2-Butanon oder Toluol.

Es stellt einen Vorteil der erfindungsgemäßen Polymere (S) dar, daß sie stabiler sind als die im Stand der Technik angeregten Polymere auf Basis von Diformylfuran und einem auf Furan bzw. Isosorbit basierenden Diacrylat. Dadurch, daß die erfindungsgemäßen Polymere einen Kohlenwasserstoffrest aufweisen, sind sie im Gegensatz zu diesen Polymeren weniger anfällig gegen Bioabbau und mithin stabiler, weiterhin dadurch auch wasserbeständiger. Weiterhin zeigen sie gegenüber dem elektronenreichen Furansystem eine verbesserte Lichtechtheit, da sie im Falle der aromatischen Monomere einen weniger elektronenreichen bzw. im Fall der aliphatischen und cycloaliphatischen Monomere (A2) einen gegenüber Einstrahlung von Licht stabilen Aufbau besitzen.

Ein wesentlicher Vorteil der Erfindung ist weiterhin die Möglichkeit des Einsatzes verschiedenster Monomere (Ax, A2) und (By, B2). Durch diese variable Synthese können Molekulargewicht, Polarität, Reaktivität und Kompatibilität der Polymere im Hinblick auf die gewünschten Systemeigenschaften des Endproduktes sehr genau eingestellt werden.

Darüberhinaus sind die Monomere (Ax, A2) und (By, B2) technisch verfügbar und die Polymere (S) mithin leicht herstellbar.

In einer bevorzugten Ausführungsform werden die Carbonylverbindungen im Verhältnis zu den Acrylatgruppen

aufweisenden Verbindungen unterstöchiometrisch eingesetzt, so daß Reaktionsgemische erhalten werden, die das Baylis-Hillman-Produkt im Gemisch mit dem eingesetzten Acrylat enthalten. Derartige Gemische können mit Vorteil in Beschichtungsmassen für die Strahlungshärtung und/oder Dual-Cure-Härtung eingesetzt werden.

Für den Einsatz in der Strahlungshärtung können die erfindungsgemäßen Polymere (S) mit mindestens einem Photoinitiator (P) vermischt werden. Zumeist sind Mengen von 0,1 bis 10 Gew% Photoinitiator ausreichend, bevorzugt 0,2 bis 5 Gew%.

Als Photoinitiatoren (P) können dem Fachmann bekannte Photoinitiatoren verwendet werden, In Betracht kommen solche mit UV-Licht aktivierbaren Photoinitiatoren, wie sie beschrieben sind in WO 2006/005491 A1, Seite 21, Zeile 18 bis Seite 22, Zeile 2 (entspricht US 2006/0009589 A1, Absatz [0150]), was hiermit durch Bezugnahme Bestandteil der vorliegenden Offenbarung sei. Es ist selbstverständlich auch möglich, mit IR-Strahlung aktivierbare Photoinitiatoren einzusetzen. Bei diesen handelt es sich häufig um eine Kombination aus mindestens einem Sensibilisatorfarbstoff, insbesondere Cyanin-, Xanthylium- oder Thiazinfarbstoffen, mit mindestens einem Co-Initiator, beispielsweise Boranatsalze, Sulfoniumsalze, Iodoniumsalze, Sulfone, Peroxide, Pyridin-N-oxide oder Halogenmethyltriazine.

Die erfindungsgemäßen Polymere können weiterhin in einer bevorzugten Ausführungsform mit mindestens einem Reaktivverdünner und/oder mindestens einer multifunktionellen, polymerisationsfähigen Verbindung und/oder weiteren lacktypischen Additiven vermischt werden, um strahlungshärtbare Beschichtungsmassen zu erhalten.

Reaktivverdünner sind beispielsweise Ester der (Meth)acrylsäure mit Alkoholen, die 1 bis 20 C-Atome aufweisen, z.B. (Meth)acrylsäuremethylester, (Meth)acrylsäure-ethylester, (Meth)acrylsäurebutylester, (Meth)acrylsäure-2-ethylhexylester, 2-Hydroxyethylacrylat, 4-Hydroxybutylacrylat , Dihydrodicyclopentadienylacrylat, Vinylaromatische Verbindungen, z.B. Styrol, Divinylbenzol, $\alpha,\beta$-ungesättigte Nitrile, z.B. Acrylnitril, Methacrylnitril, $\alpha,\beta$-ungesättigte Aldehyde, z.B. Acrolein, Methacrolein, Vinylester, z.B. Vinylacetat, Vinylpropionat, halogenierte ethylenisch ungesättigte Verbindungen, z.B. Vinylchlorid, Vinylidenchlorid, konjugierte ungesättigte Verbindungen, z.B. Butadien, Isopren, Chloropren, einfach ungesättigte Verbindungen, z.B. Ethylen, Propylen, 1-Buten, 2-Buten, iso-Buten, cyclische einfach ungesättigte Verbindungen, z.B. Cyclopenten, Cyclohexen, Cyclododecen, N-Vinylformamid, Allylessigsäure, Vinylessigsäure, monoethylenisch ungesättigten Carbonsäuren mit 3 bis 8 C-Atomen sowie deren wasserlöslichen Alkalimetall-, Erdalkalimetall- oder Ammoniumsalze wie beispielsweise: Acrylsäure, Methacrylsäure, Dimethylacrylsäure, Ethacrylsäure, Maleinsäure, Citraconsäure, Methylenmalonsäure, Crotonsäure, Fumarsäure, Mesaconsäure und Itaconsäure, Maleinsäure, N-Vinylpyrrolidon, N-Vinyllactame, wie z.B. N-Vinylcaprolactam, N-Vinyl-N-Alkyl-carbonsäureamide oder N-Vinyl-carbonsäureamide, wie z. B. N-Vinylacetamid, N-Vinyl-N-methylformamid und N-Vinyl-N-methylacetamid oder Vinylether, z.B. Methylvinylether, Ethylvinylether, *n*-Propylvinylether, *iso*-Propylvinylether, n-Butylvinylether, *sek*-Butylvinylether, *iso*-Butylvinylether, *tert*-Butylvinylether, 4-Hydroxybutylvinylether, sowie Gemische davon.

Der Begriff "(Meth)Acryl" steht in dieser Schrift als Sammelbegriff für "Methacryl" und "Acryl".

Multifunktionelle, polymerisationsfähige Verbindungen sind bevorzugt multifunktionelle (Meth)acrylate, die mindestens 2, bevorzugt 3 - 10, besonders bevorzugt 3 - 6, ganz besonders bevorzugt 3 - 4 und insbesondere 3 (Meth)acrylatgruppen, bevorzugt Acrylatgruppen tragen.
Dies können beispielsweise Ester der (Meth)acrylsäure mit entsprechend mindestens zweiwertigen Polyalkoholen sein.

Derartige Polyalkohole sind beispielsweise mindestens zweiwertige Polyole, Polyether- oder Polyesterole oder Polyacrylatpolyole mit einer mittleren OH-Funktionalität von mindestens 2, bevorzugt 3 bis 10, geeignet.

Mindestens zweiwertige Polyalkohole sind beispielsweise alkoxylierte mindestens zweiwertige Polyalkohole der Formeln (IVa) bis (IVc),

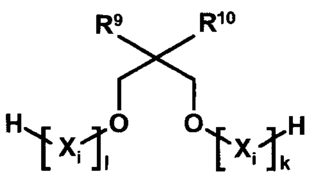

(IVa)

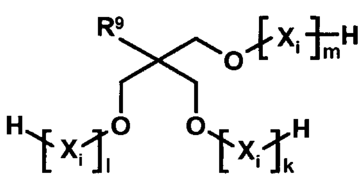

(IVb)

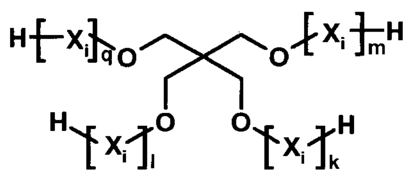

(IVc)

worin
$R^9$ und $R^{10}$ unabhängig voneinander Wasserstoff oder $C_1$ - $C_{18}$-Alkyl,
k, l, m, q unabhängig voneinander je für eine ganze Zahl von 1 bis 10, bevorzugt 1 bis 5 und besonders bevorzugt 1 bis 3 steht und
jedes $X_i$ für i = 1 bis k, 1 bis l, 1 bis m und 1 bis q unabhängig voneinander ausgewählt sein kann aus der Gruppe $-CH_2-CH_2-O-$, $-CH_2-CH(CH_3)-O-$, $-CH(CH_3)-CH_2-O-$, $-CH_2-C(CH_3)_2-O-$, $-C(CH_3)_2-CH_2-O-$, $-CH_2-CHVin-O-$, $-CHVin-CH_2-O-$, $-CH_2-CHPh-O-$ und $-CHPh-CH_2-O-$, bevorzugt aus der Gruppe $-CH_2-CH_2-O-$, $-CH_2-CH(CH_3)-O-$ und

$-CH(CH_3)-CH_2-O-$, und besonders bevorzugt $-CH_2-CH_2-O-$,
worin Ph für Phenyl und Vin für Vinyl steht.

Bevorzugt handelt es sich dabei um Acrylate von ein- bis zwanzigfach und besonders bevorzugt drei- bis zehnfach ethoxyliertem, propoxyliertem oder gemischt ethoxyliertem und propoxyliertem und insbesondere ausschließlich ethoxyliertem Neopentylglykol, Glycerin, Trimethylolpropan, Trimethylolethan oder Pentaerythrit.

Bevorzugte Verbindungen (IV) sind Ethylenglykoldiacrylat, 1,2-Propandioldiacrylat, 1,3-Propandioldiacrylat, 1,3-Butandioldiacrylat,1,4-Butandioldiacrylat, 1,6-Hexandioldiacrylat, Trimethylolpropantriacrylat, Pentaerythrittetraacrylat, Polyestepolyolacrylate, Polyetherolacrylate und Triacrylat von ein- bis zwanzigfach ethoxyliertem Trimethylolpropan.

Besonders bevorzugte Verbindungen sind 1,4-Butandioldiacrylat, 1,6-Hexandioldiacrylat, Trimethylolpropantriacrylat, Pentaerythrittetraacrylat und Triacrylat von ein- bis zwanzigfach ethoxyliertem Trimethylolpropan.

Geeignete Alkylenoxide sind beispielsweise Ethylenoxid, Propylenoxid, *iso*-Butylenoxid, Vinyloxiran und/oder Styroloxid.

Die Alkylenoxidkette kann bevorzugt aus Ethylenoxid-, Propylenoxid- und/oder Butylenoxideinheiten zusammengesetzt sein. Eine solche Kette kann sich aus einer Spezies eines Alkylenoxides oder aus einem Gemisch von Alkylenoxiden zusammensetzen. Wird ein Gemisch verwendet, können die unterschiedlichen Alkylenoxideinheiten statistisch oder als Block oder Blöcke einzelner Spezies vorliegen. Bevorzugt ist als Alkylenoxid Ethylenoxid, Propylenoxid oder ein Gemisch daraus, besonders bevorzugt ist es Ethylenoxid oder Propylenoxid und ganz besonders bevorzugt Ethylenoxid.

Die Anzahl der Alkylenoxideinheiten in der Kette beträgt beispielsweise 1 bis 20, bevorzugt 1 bis 10, besonders bevorzugt 1 - 5 und insbesondere 1 - 3 und außergewöhnlich bevorzugt 1, bezogen auf die jeweiligen Hydroxygruppen des Polyalkohols.

Als Polyesterole kommen z.B. solche in Betracht, wie sie oben bereits aufgeführt sind.

Die Molekulargewichte $M_n$ der Polyesterole bzw. Polyetherole liegen bevorzugt zwischen 100 und 4000 g/mol ($M_n$ bestimmt durch Gelpermeationschromatographie mit Polymethylmethacrylat als Standard und Tetrahydrofuran als Elutionsmittel).

Weitere multifunktionelle (Meth)acrylate können Polyester(meth)acrylate, Epoxy(meth)-acrylate, Urethan(meth)acrylate oder (meth)acrylierte Polyacrylate sein, wie sie oben als Acrylate von (IVa), (IVb) oder (IVc) aufgeführt sind. Anstelle der (Meth)acrylatgruppen können auch andere radikalisch oder kationisch polymerisierbare Gruppen eingesetzt werden.

Urethan(meth)acrylate sind z.B. erhältlich durch Umsetzung von Polyisocyanaten mit Hydroxyalkyl(meth)acrylaten oder -vinylethern und gegebenenfalls Kettenverlängerungsmitteln wie Diolen, Polyolen, Diaminen, Polyaminen oder Dithiolen oder Polythiolen.

Bevorzugte multifunktionelle (Meth)acrylate sind Trimethylolpropantri(meth)acrylat, (Meth)Acrylate von ethoxyliertem und/oder propoxyliertem Trimethylolpropan, Pentaerythrit, Glycerin oder Di-Trimethylolpropan. Besonders bevorzugt sind Acrylate von ethoxyliertem und/oder propoxyliertem Trimethylolpropan oder Pentaerythrit.

Als weitere lacktypische Additive können beispielsweise Antioxidantien, Stabilisatoren, Aktivatoren (Beschleuniger), Füllmittel, Pigmente, Farbstoffe, antistatische Agentien, Flammschutzmittel, Verdicker, thixotrope Agentien, oberflächenaktive Agentien, Viskositätsmodifikatoren, Plastifizierer oder Chelatbildner verwendet werden.

Als Beschleuniger für die thermische Nachhärtung kann z.B. Zinnoctoat, Zinkoctoat, Dibutylzinn-dilaurat oder Diaza[2.2.2]bicyclooctan verwendet werden.

Weiterhin können ein oder mehrere photochemisch und/oder thermisch aktivierbare Initiatoren zugesetzt werden, z.B. Kaliumperoxodisulfat, Dibenzoylperoxid, Cyclohexanonperoxid, Di-tert.-Butylperoxid, Azobis-*iso*-butyronitril, Cyclohexylsulfonylacetylperoxid, Di-*iso*-propylpercarbonat, *tert*-Butylperoctoat oder Benzpinakol, sowie beispielsweise solche thermisch aktivierbare Initiatoren, die eine Halbwertszeit bei 80°C von mehr als 100 Stunden aufweisen, wie Di-t-Butylperoxid, Cumolhydroperoxid, Dicumylperoxid, t-Butylperbenzoat, silylierte Pinakole, die z. B. unter dem Handelsnamen AD-DID 600 der Firma Wacker kommerziell erhältlich sind oder Hydroxygruppen-haltige Amin-N-Oxide, wie 2,2,6,6-Tetramethylpiperidin-N-oxyl, 4-Hydroxy-2,2,6,6-Tetramethylpiperidin-N-oxyl etc.

Weitere Beispiele geeigneter Initiatoren sind in "Polymer Handbook", 2. Aufl., Wiley & Sons, New York beschrieben.

Als Verdicker kommen neben radikalisch (co)polymerisierten (Co)Polymerisaten, übliche organische und anorganische Verdicker wie Hydroxymethylcellulose oder Bentonit in Betracht.

Als Chelatbildner können z.B. Ethylendiamin-tetraessigsäure und deren Salze sowie $\beta$-Diketone verwendet werden.

Geeignete Füllstoffe umfassen Silikate, z. B. durch Hydrolyse von Siliciumtetrachlorid erhältliche Silikate wie Aerosil® der Fa. Degussa, Kieselerde, Talkum, Aluminiumsilikate, Magnesiumsilikate, Calciumcarbonate etc.

Geeignete Stabilisatoren umfassen typische UV-Absorber wie Oxanilide, Triazine und Benzotriazol (letztere erhältlich als Tinuvin® -Marken der Ciba-Spezialitätenchemie) und Benzophenone. Diese können allein oder zusammen

mit geeigneten Radikalfängern, beispielsweise sterisch gehinderten Aminen wie 2,2,6,6-Tetramethylpiperidin, 2,6-Ditert.-butylpiperidin oder deren Derivaten, z. B. Bis-(2,2,6,6-tetra-methyl-4-piperidyl)sebacinat, eingesetzt werden. Stabilisatoren werden üblicherweise in Mengen von 0,1 bis 5,0 Gew.-%, bezogen auf die in der Zubereitung enthaltenen festen Komponenten, eingesetzt.

Die erfindungsgemäßen Polymere (S) sind mit Vorteil für Dual- oder Multi-Cure Anwendungen verwendbar, wenn sie zusätzlich mindestens eine Verbindung (V) mit mindestens einer gegenüber Hydroxy (-OH) reaktiven Gruppe enthalten.

Verbindungen (V) mit mindestens einer gegenüber Hydroxy (-OH) reaktiven Gruppe können beispielsweise Isocyanate, verkappte Isocyanate, Epoxide, Carbonsäuren oder deren Derivate, Carbonate oder Aminoplaste sein, bevorzugt sind Isocyanate, blockierte Isocyanate und Melamin-Formaldehyd-Harze, besonders bevorzugt sind Isocyanate.

Isocyanate sind beispielsweise aliphatische, aromatische und cycloaliphatische Di- und Polyisocyanate mit einer NCO-Funktionalität von mindestens 1,8, bevorzugt 1,8 bis 5 und besonders bevorzugt 2 bis 4 in Frage, sowie deren Isocyanurate, Biurete, Urethane, Allophanate und Uretdione.

Bei den Diisocyanaten handelt es sich bevorzugt um Isocyanate mit 4 bis 20 C-Atomen. Beispiele für übliche Diisocyanate sind aliphatische Diisocyanate wie Tetramethylendiisocyanat, Hexamethylendiisocyanat (1,6-Diisocyanatohexan), Octamethylendiisocyanat, Decamethylendiisocyanat, Dodecamethylendiisocyanat, Tetradecamethylendiisocyanat, Derivate des Lysindiisocyanates, Trimethylhexandiisocyanat oder Tetramethylhexandiisocyanat, cycloaliphatische Diisocyanate wie 1,4-, 1,3- oder 1,2-Diisocyanatocyclohexan, 4,4'- oder 2,4'-Di(isocyanatocyclohexyl)methan, 1-Isocyanato-3,3,5- trimethyl-5-(isocyanatomethyl)cyclohexan (isophorondiisocyanat), 1,3- oder 1,4-Bis(isocyanatomethyl)cyclohexan oder 2,4-, oder 2,6-Diisocyanato-1-methylcyclohexan sowie 3 (bzw. 4), 8 (bzw. 9)-Bis(isocyanatomethyl)-tricyclo[5.2.1.0$^{2.6}$]decan-Isomerengemische sowie aromatische Diisocyanate wie 2,4- oder 2,6-Toluylendiisocyanat und deren Isomerengemische, m- oder p-Xylylendiisocyanat, 2,4'- oder 4,4'-Diisocyanatodiphenylmethan (MDI) und deren Isomerengemische, Mischungen aus 2,4'-, 4,4'- und oligomeren Diisocyanatodiphenylmethanen (Polymer-MDI), 1,3- oder 1,4-Phenylendiisocyanat, 1-Chlor-2,4-phenylendiisocyanat, 1,5-Naphthylendiisocyanat, Diphenylen-4,4'-diisocyanat, 4,4'-Diisocyanato-3,3'-dimethyldiphenyl, 3-Methyldiphenylmethan-4,4'-diisocyanat, Tetra-methylxylylendiisocyanat, 1,4-Diisocyanatobenzol oder Diphenylether-4,4'-diisocyanat.

Es können auch Gemische der genannten Diisocyanate vorliegen.

Als Polyisocyanate kommen Isocyanuratgruppen aufweisende Polyisocyanate, Uretdiondiisocyanate, Biuretgruppen aufweisende Polyisocyanate, Urethan- oder Allophanatgruppen aufweisende Polyisocyanate, Oxadiazintriongruppen oder Iminooxadiazindiongruppen enthaltende Polyisocyanate, Uretonimin-modifizierte Polyisocyanate von geradlinigen oder verzweigten $C_4$-$C_{20}$-Alkylendiisocyanaten, cycloaliphatischen Diisocyanaten mit insgesamt 6 bis 20 C-Atomen oder aromatischen Diisocyanaten mit insgesamt 8 bis 20 C-Atomen oder deren Gemische in Betracht.

Die einsetzbaren Di- und Polyisocyanate haben bevorzugt einen Gehalt an Isocyanatgruppen (berechnet als NCO, Molekulargewicht = 42 g/mol) von 10 bis 60 Gew% bezogen auf das Di- und Polyisocyanat(gemisch), bevorzugt 12 bis 50 Gew% und besonders bevorzugt 12 bis 40 Gew%.

Bevorzugt sind aliphatische bzw. cycloaliphatische Di- und Polyisocyanate, z.B. die vorstehend genannten aliphatischen bzw. cycloaliphatischen Diisocyanate, oder deren Mischungen.

Besonders bevorzugt sind Hexamethylendiisocyanat, 1,3-Bis(isocyanatomethyl)-cyclohexan, Isophorondiisocyanat und Di(isocyanatocyclohexyl)methan oder deren Polyisocyanate, ganz besonders bevorzugt sind Isophorondiisocyanat und Hexamethylendiisocyanat oder deren Polyisocyanate, insbesondere bevorzugt ist Hexamethylendiisocyanat oder dessen Polyisocyanate.

Weiterhin bevorzugt sind

1) Isocyanuratgruppen aufweisende Polyisocyanate von aromatischen, aliphatischen und/oder cycloaliphatischen Diisocyanaten. Besonders bevorzugt sind hierbei die entsprechenden aliphatischen und/oder cycloaliphatischen Isocyanato-Isocyanurate und insbesondere die auf Basis von Hexamethylendiisocyanat und Isophorondiisocyanat. Bei den dabei vorliegenden Isocyanuraten handelt es sich insbesondere um Tris-isocyanatoalkyl- bzw. Tris-isocyanatocycloalkyl-Isocyanurate, welche cyclische Trimere der Diisocyanate darstellen, oder um Gemische mit ihren höheren, mehr als einen Isocyanuratring aufweisenden Homologen. Die Isocyanato-Isocyanurate haben im allgemeinen einen NCO-Gehalt von 10 bis 30 Gew.-%, insbesondere 15 bis 25 Gew.-% und eine mittlere NCO-Funktionalität von 2,6 bis 4,5.

2) Uretdiondiisocyanate mit aromatisch, aliphatisch und/oder cycloaliphatisch gebundenen Isocyanatgruppen, vorzugsweise aliphatisch und/oder cycloaliphatisch gebundenen und insbesondere die von Hexamethylendiisocyanat oder Isophorondiisocyanat abgeleiteten. Bei Uretdiondiisocyanaten handelt es sich um cyclische Dimerisierungsprodukte von Diisocyanaten.

Die Uretdiondiisocyanate können in den erfindungsgemäßen Zubereitungen als alleinige Komponente oder im Gemisch mit anderen Polyisocyanaten, insbesondere den unter 1) genannten, eingesetzt werden.

3) Biuretgruppen aufweisende Polyisocyanate mit aromatisch, cycloaliphatisch oder aliphatisch gebundenen, bevorzugt cycloaliphatisch oder aliphatisch gebundenen Isocyanatgruppen, insbesondere Tris(6-isocyanatohexyl)biuret oder dessen Gemische mit seinen höheren Homologen. Diese Biuretgruppen aufweisenden Polyisocyanate weisen im allgemeinen einen NCO-Gehalt von 18 bis 22 Gew.-% und eine mittlere NCO-Funktionalität von 2,8 bis 4,5 auf.

4) Urethan- und/oder Allophanatgruppen aufweisende Polyisocyanate mit aromatisch, aliphatisch oder cycloaliphatisch gebundenen, bevorzugt aliphatisch oder cycloaliphatisch gebundenen Isocyanatgruppen, wie sie beispielsweise durch Umsetzung von überschüssigen Mengen an Hexamethylendiisocyanat oder an Isophorondiisocyanat mit ein- oder mehrwertigen Alkoholen wie z.B. Methanol, Ethanol, *iso*-Propanol, n-Propanol, n-Butanol, *iso*-Butanol, *sek*-Butanol, *tert*-Butanol, n-Hexanol, n-Heptanol, n-Octanol, n-Decanol, n-Dodecanol (Laurylalkohol), 2-Ethylhexanol, n-Pentanol, Stearylalkohol, Cetylalkohol, Laurylalkohol, Ethylenglykolmonomethylether, Ethylenglykolmonoethylether, 1,3-Propandiol-monomethylether, Cyclopentanol, Cyclohexanol, Cyclooctanol, Cyclododecanol oder mehrwertige Alkohole, wie sie oben bei den Polyesterolen aufgeführt sind, oder deren Gemischen erhalten werden können. Diese Urethan- und/oder Allophanatgruppen aufweisenden Polyisocyanate haben im allgemeinen einen NCO-Gehalt von 12 bis 20 Gew.-% und eine mittlere NCO-Funktionalität von 2,5 bis 4,5.

5) Oxadiazintriongruppen enthaltende Polyisocyanate, vorzugsweise von Hexamethylendiisocyanat oder Isophorondiisocyanat abgeleitet. Solche Oxadiazintriongruppen enthaltenden Polyisocyanate sind aus Diisocyanat und Kohlendioxid herstellbar.

6) Iminooxadiazindiongruppen enthaltende Polyisocyanate, vorzugsweise von Hexamethylendiisocyanat oder Isophorondiisocyanat abgeleitet. Solche Iminooxadiazindiongruppen enthaltenden Polyisocyanate sind aus Diisocyanaten mittels spezieller Katalysatoren herstellbar.

7) Uretonimin-modifizierte Polyisocyanate.

Die Polyisocyanate 1) bis 7) können im Gemisch, gegebenenfalls auch im Gemisch mit Diisocyanaten, eingesetzt werden.

Die Isocyanatgruppen können auch in verkappter Form vorliegen. Als Verkappungsmittel für NCO-Gruppen eignen sich z.B. Oxime, Phenole, Imidazole, Pyrazole, Pyrazolinone, Diketopiperazine, Caprolactam, Malonsäureester oder Verbindungen, wie sie genannt sind in den Veröffentlichungen von Z.W. Wicks, Prog. Org. Coat. 3 (1975) 73 - 99 und Prog. Org. Coat 9 (1981), 3 - 28 sowie in Houben-Weyl, Methoden der Organischen Chemie, Bd. XIV/2, 61 ff. Georg Thieme Verlag, Stuttgart 1963.

Unter Verkappungs- bzw. Blockierungsmitteln werden dabei Verbindungen verstanden, die Isocyanatgruppen in blockierte (verkappte bzw. geschützte) Isocyanatgruppen umwandeln, die dann unterhalb der sogenannten Deblockierungstemperatur nicht die üblichen Reaktionen einer freien Isocyanatgruppe zeigen. Solche Verbindungen mit blockierten Isocyanatgruppen kommen üblicherweise in Dual-Cure-Beschichtungsmitteln zur Anwendung, die über Isocyanatgruppenhärtung endgehärtet werden.

Epoxidverbindungen sind solche mit mindestens einer, bevorzugt mit mindestens zwei, vorzugsweise zwei oder drei Epoxidgruppen im Molekül.

In Betracht kommen z.B. epoxidierte Olefine, Glycidylester (z.B. Glycidyl(meth)acrylat) von gesättigten oder ungesättigten Carbonsäuren oder Glycidylether aliphatischer oder aromatische Polyole. Derartige Produkte werden im Handel in großer Zahl angeboten. Besonders bevorzugt sind Polyglycidylverbindungen vom Bisphenol A-, -F- oder -B-Typ und Glycidylether mehrfunktioneller Alkohole, z.B. des Butandiol, des 1,6-Hexandiol, des Glycerin und des Pentaerythrit. Beispiele für derartige Polyepoxidverbindungen sind Epikote® 812 (Epoxidwert: ca. 0,67 mol/100g) und Epikote® 828 (Epoxidwert: ca. 0,53 mol/100g), Epikote® 1001, Epikote® 1007 und Epikote® 162 (Epoxidwert: ca. 0,61 mol/100g) der Firma Resolution Performance Products, Rütapox® 0162 (Epoxidwert: ca. 0,58 mol/100g), Araldit® DY 0397 (Epoxidwert: ca. 0,83 mol/100g) der Firma Vantico AG.

Als Komponenten (V) kommen weiterhin Verbindungen in Frage, mit aktiven Methylol- oder Alkylalkoxygruppen, insbesondere Methylalkoxygruppen, an Aminoplastvernetzern, wie z.B veretherte Umsetzungsprodukte von Formaldehyd mit Aminen, wie Melamin, Harnstoff etc., Phenol/Formaldehydaddukte, Siloxan oder Silangruppen und Anhydride ein, wie sie z.B. in US 5,770,650 beschrieben sind, ein.

Unter den technisch weit verbreiteten und bekannten, bevorzugten Aminoplasten sind besonders bevorzugt Harnstoffharze und Melaminharze, wie z.B. Harnstoff-Formaldehyd-Harze, Melamin-Formaldehyd-Harze, Melamin-Phenol-Formaldehyd-Harze oder Melamin-Harnstoff-Formaldehyd-Harze, verwendbar.

Als Harnstoffharze sind solche geeignet, die durch Umsetzung von Harnstoffen mit Aldehyden erhältlich sind und gegebenenfalls modifiziert werden können.

Als Harnstoffe sind Harnstoff, N-substituierte oder N,N'-disubstituierte Harnstoffe geeignet, wie z.B. N-Methylharnstoff, N-Phenylharnstoff, N,N'-Dimethylharnstoff, Hexamethylendiharnstoff, N,N'-Diphenylharnstoff, 1,2-Ethylendiharnstoff, 1,3-Propylen-diharnstoff, Diethylentriharnstoff, Dipropylentriharnstoff, 2-Hydroxypropylendiharnstoff, 2-Imidazolidinon (Ethylenharnstoff), 2-Oxohexahydropyrimidin (Propylenharnstoff) oder 2-Oxo-5-Hydroxyhexahydropyrimidin (5-Hydroxypropylenharnstoff).

Harnstoffharze können gegebenenfalls teilweise oder vollständig modifiziert werden, z.B. durch Umsetzung mit mono- od. polyfunktionellen Alkoholen, Ammoniak bzw. Aminen (kationisch modifizierte Harnstoffharze) oder mit (Hydrogen)sulfiten (anionisch modifizierte Harnstoffharze), insbesondere geeignet sind die alkoholmodifizierten Harnstoffharze.

Als Alkohole kommen für die Modifizierung $C_1$ - $C_6$-Alkohole in Frage, bevorzugt $C_1$-$C_4$-Alkohol und insbesondere Methanol, Ethanol, *iso*-Propanol, n-Propanol, n-Butanol, *iso*-Butanol und *sek*-Butanol.

Als Melaminharze sind solche geeignet, die durch Umsetzung von Melamin mit Aldehyden erhältlich sind und gegebenenfalls teilweise oder vollständig modifiziert werden können.

Als Aldehyde sind insbesondere Formaldehyd, Acetaldehyd, *Iso*-Butyraldehyd und Glyoxal geeignet.

Melamin-Formaldehyd-Harze sind Reaktionsprodukte der Umsetzung von Melamin mit Aldehyden, z.B. den o.g. Aldehyden, insbesondere Formaldehyd. Gegebenenfalls werden die erhaltenen Methylol-Gruppen durch Veretherung mit den oben genannten ein- oder mehrwertigen Alkoholen modifiziert. Weiterhin können die Melamin-Formaldehyd-Harze auch wie oben beschrieben durch Reaktion mit Aminen, Aminocarbonsäuren oder Sulfiten modifiziert werden.

Durch Einwirkung von Formaldehyd auf Mischungen von Melamin und Harnstoff beziehungsweise auf Mischungen aus Melamin und Phenol entstehen erfindungsgemäß ebenfalls verwendbare Melamin-Harnstoff-Formaldehyd-Harze beziehungsweise Melamin-Phenol-Formaldehyd-Harze.

Die Herstellung der genannten Aminoplaste erfolgt nach an sich bekannten Verfahren.

Besonders genannte Beispiele sind Melamin-Formaldehyd-Harze, einschließlich monomerer oder polymerer Melaminharze und teilweise oder vollständig alkylierte Melaminharze, Harnstoff-Harze, z.B. Methylolharnstoffe wie Formaldehyd-Harnstoff-Harze, Alkoxyharnstoffe wie butylierte Formaldehyd-Harnstoff-Harze, aber auch N-Methylolacrylamid-emulsionen, *iso*-Butoxy methyl acrylamid-emulsionen, Polyanhydride, wie z.B. Polybernsteinsäureanhydrid, und Siloxane oder Silane, z.B. Dimethyldimethoxysilane.

Besonders bevorzugt sind Aminoplastharze wie Melamin-Formaldehyd-Harze oder Formaldehyd-Harnstoff-Harze.

Ebenfalls offenbart wird ein Verfahren zur Beschichtung von Substraten, in dem man eine erfindungsgemäße Beschichtungsmasse einsetzt.

Die Beschichtung der Substrate erfolgt nach üblichen, dem Fachmann bekannten Verfahren, wobei man wenigstens eine erfindungsgemäße Beschichtungsmasse oder diese enthaltende Lackformulierung auf das zu beschichtende Substrat in der gewünschten Stärke aufbringt und die flüchtigen Bestandteile der Beschichtungsmasse, gegebenenfalls unter Erhitzen, entfernt. Dieser Vorgang kann gewünschtenfalls ein- oder mehrfach wiederholt werden. Das Aufbringen auf das Substrat kann in bekannter Weise, z. B. durch Spritzen, Spachteln, Rakeln, Bürsten, Rollen, Walzen oder Gießen erfolgen. Die Beschichtungsstärke liegt in der Regel in einem Bereich von etwa 3 bis 1000 $g/m^2$ und vorzugsweise 10 bis 200 $g/m^2$.

Weiterhin wird ein Verfahren zum Beschichten von Substraten offenbart, bei dem man die erfindungsgemäßen Beschichtungsmassen oder diese enthaltende Lackformulierungen, gegebenenfalls mit weiteren lacktypischen Additiven und thermisch härtbaren Harzen versetzt, auf das Substrat aufbringt und gegebenenfalls trocknet, mit Elektronenstrahlen oder UV Belichtung unter sauerstoffhaltiger Atmosphäre oder bevorzugt unter Inertgas härtet, gegebenenfalls bei Temperaturen bis zur Höhe der Trocknungstemperatur und anschließend bei Temperaturen bis zu 160°C, bevorzugt zwischen 60 und 160 °C, thermisch behandelt.

Das Verfahren zum Beschichten von Substraten kann auch so durchgeführt werden, daß nach dem Aufbringen der erfindungsgemäßen Beschichtungsmasse oder Lackformulierungen zunächst bei Temperaturen bis zu 160°C, bevorzugt zwischen 60 und 160°C, thermisch behandelt und anschließend mit Elektronenstrahlen oder UV Belichtung unter Sauerstoff oder bevorzugt unter Inertgas gehärtet wird.

Die Härtung der auf dem Substrat gebildeten Filme kann gewünschtenfalls ausschließlich thermisch erfolgen. Im allgemeinen und bevorzugt härtet man die Beschichtungen jedoch sowohl durch Bestrahlung mit energiereicher Strahlung als auch thermisch.

Gegebenenfalls kann, wenn mehrere Schichten des Beschichtungsmittels übereinander aufgetragen werden, nach jedem Beschichtungsvorgang eine thermische und/oder Strahlungshärtung erfolgen.

Als Strahlungsquellen für die Strahlungshärtung geeignet sind z.B. Quecksilber-Niederdruckstrahler, -Mitteldruckstrahler mit Hochdruckstrahler sowie Leuchtstoffröhren, Impulsstrahler, Metallhalogenidstrahler, Elektronenblitzeinrichtungen, wodurch eine Strahlungshärtung ohne Photoinitiator möglich ist, oder Excimerstrahler. Die Strahlungshärtung erfolgt durch Einwirkung energiereicher Strahlung, also UV-Strahlung oder Tageslicht, vorzugsweise Licht im Wellenlängenbereich von $\lambda$=200 bis 700 nm strahlt, besonders bevorzugt von $\lambda$=200 bis 500 nm und ganz besonders bevorzugt $\lambda$ =250 bis 400 nm, oder durch Bestrahlung mit energiereichen Elektronen (Elektronenstrahlung; 150 bis 300 keV). Als Strahlungsquellen dienen beispielsweise Hochdruckquecksilberdampflampen, Laser, gepulste Lampen (Blitzlicht), Halogenlampen oder Excimerstrahler. Die üblicherweise zur Vernetzung ausreichende Strahlungsdosis bei UV-Härtung liegt im Bereich von 80 bis 3000 mJ/cm$^2$.

Selbstverständlich sind auch mehrere Strahlungsquellen für die Härtung einsetzbar, z.B. zwei bis vier.

Diese können auch in jeweils unterschiedlichen Wellenlängebereichen strahlen.

Die Härtung kann auch zusätzlich zur oder anstelle der thermischen Härtung durch NIR-Strahlung erfolgen, wobei als NIR-Strahlung hier elektromagnetische Strahlung im Wellenlängenbereich von 760 nm bis 2,5 $\mu$m, bevorzugt von 900 bis 1500 nm bezeichnet ist. Eine Härtung per Strahlung erfordert zumeist einen geeigneten Photoinitiator mit einer Absorption im Bereich der eingestrahlten Wellenlänge.

Die Bestrahlung kann gegebenenfalls auch unter Ausschluß von Sauerstoff, z. B. unter Inertgas-Atmosphäre, durchgeführt werden. Als Inertgase eignen sich vorzugsweise Stickstoff, Edelgase, Kohlendioxid oder Verbrennungsgase. Desweiteren kann die Bestrahlung erfolgen, indem die Beschichtungsmasse mit transparenten Medien abgedeckt wird. Transparente Medien sind z. B. Kunststofffolien, Glas oder Flüssigkeiten, z. B. Wasser. Besonders bevorzugt ist eine Bestrahlung in der Weise, wie sie in der DE-A1 199 57 900 beschrieben ist.

Ein weiterer Gegenstand der Erfindung ist ein Verfahren zur Beschichtung von Substraten, wobei man

i) ein Substrat mit einer Beschichtungsmasse, wie zuvor beschrieben, beschichtet,
ii) flüchtige Bestandteile der Beschichtungsmasse zur Filmbildung unter Bedingungen entfernt, bei denen der Initiator (P) im wesentlichen noch keine freien Radikale ausbildet,
iii) gegebenenfalls den in Schritt ii) gebildeten Film mit energiereicher Strahlung bestrahlt, wobei der Film vorgehärtet wird, und anschließend gegebenenfalls den mit dem vorgehärteten Film beschichteten Gegenstand mechanisch bearbeitet oder die Oberfläche des vorgehärteten Films mit einem anderen Substrat in Kontakt bringt,
iv) dem Film thermisch endhärtet.

Dabei können die Schritte iv) und iii) auch in umgekehrter Reihenfolge durchgeführt, d. h. der Film kann zuerst thermisch und dann mit energiereicher Strahlung gehärtet werden.

Die erfindungsgemäßen Beschichtungsmassen und Lackformulierungen eignen sich besonders zum Beschichten von Substraten wie Holz, Papier, Textil, Leder, Vlies, Kunststoffoberflächen, Glas, Keramik, mineralischen Baustoffen, wie Zement-Formsteine und Faserzementplatten, oder Metallen oder beschichteten Metallen, bevorzugt von Kunststoffen oder Metallen, die beispielsweise auch als Folien vorliegen können.

Besonders bevorzugt eignen sich die erfindungsgemäßen Beschichtungsmassen als oder in Außenbeschichtungen, also solche Anwendungen, die dem Tageslicht ausgesetzt sind, bevorzugt von Gebäuden oder Gebäudeteilen, Innenbeschichtungen, Straßenmarkierungen, Beschichtungen auf Fahrzeugen und Flugzeugen. Insbesondere werden die erfindungsgemäßen Beschichtungsmassen als oder in Automobilklar- und -decklacke(n) eingesetzt.

Ein weiterer erfindungsgemäßer Gegenstand ist die Verwendung der erfindungsgemäßen Polymere (S) in Beschichtungsmassen für Dual-Cure Anwendungen.

Ein weiterer erfindungsgemäßer Gegenstand ist die Verwendung der erfindungsgemäßen Polymere (S) in der Strahlungshärtung.

Die folgenden Beispiele sollen die Eigenschaften der Erfindung erläutern, ohne sie aber einzuschränken.

Alle Einsatzstoffe und Lösungsmittel wurden in den kommerziell erhältlichen Reinheitsgraden wie erhalten eingesetzt. Einsatzstoffe wurden, sofern nicht anders gekennzeichnet, von Sigma Aldrich (Buchs, Switzerland) bezogen. Deuterierte Lösungsmittel für NMR wurden bezogen von Armar Chemicals (Döttigen, Schweiz).

Gelpermeationschromatographie (GPC) wurde durchgeführt mit einem Waters Alliance GPCV 2000 System mit Refraktivindex, Differentialviscometer und Lichtstreuungsdetektor. Trennung wurde bei 60°C auf TSK-Gel Alpha 2500 + 3000 + 4000 Säulen mit vakuumdestillierten Dimethylformamid (HPLC Reinheit) mit 0,5 g/L LiCl als Eluent oder mit wasserfreiem THF, bei einer Strömungsrate von 0,6 mL/min durchgeführt. Molekulargewichte wurden bestimmt unter Benutzung einer universellen Kalibrierungskurve, die mit Poly(methyl methacrylat) PMMA-Standard einer geringen Polydispersität aufgenommen war. Die Ergebnisse wurden berechnet mit der Empower Pro multidetection GPC software (Version 5.00). Das Volumen innerhalb des Detektors wurde eingestellt anhand der Position der Signale von einheitlichen PEG Oligomeren. Das Volumen der Injektorschleife betrug 0,214 mL, und die Polymerkonzentration wurde so berechnet, daß das viskosimetrische Signal weniger als 0,5% der Grundlinie betrug.

NMR Spektren: Bruker ARX-400 Spektrometer mit 400 MHz. CDCls wurde als Lösungsmittel eingesetzt. Für $^1$H-NMR Spektren: Die chemische Verschiebung wurde relativ zum Rückstandssignal des Lösungsmittels als interner Standard angegeben. ($CDCl_3$: 7,25 ppm). $^1$H Zuordnungen wurden bestätigt durch 2D-COSY-45 Spektren. Kopplungskonstanten J in Hz.

Glasübergangstemperaturen wurden bestimmt mit einem Setaram DSC 131 Differential Scanning Calorimeter an 3-5 mg Probenmenge, die Aufheizrate betrug 5 °C pro min, gemessen wurde unter $N_2$.

Beispiel 1: Polymer aus Trimethylolpropantriacrylat und 2,6-Pyridindicarbaldehyd

Zu einer gerührten Mischung aus Trimethylolpropantriacrylat (175 μL, 0,584 mmol) und 2,6-Pyridindicarbaldehyd (118,5 mg, 0,876 mmol) wurden Diazabicyclooctan (DABCO) (145 mg) und Methanol (100 μL) hinzugegeben. 0,2 mL DMF wurden weiterhin als Lösungsvermittler zugegeben. Das homogene Reaktionsgemisch wurde bei Raumtemperatur (23°C) gerührt, und der Reaktionsfortschritt per $^1$H-NMR und GPC verfolgt. Nach 5 h wurde das Reaktionsgemisch mit Chloroform verdünnt und gewaschen zunächst mit gesättigter $NaHCO_3$-Lösung und danach mit gesättigter Kochsalzlösung. Nach Trocknen der Chloroformphase über $Na_2SO_4$ wurde das Lösemittel unter vermindertem Druck entfernt und das Endprodukt als farbloses Öl erhalten.

Das erfindungsgemäße Produkt wies folgende Kennzahlen auf:

GPC (DMF): Mn: 4600 Da, Mw: 36700 Da,
$^1$H-NMR (400 MHz, $CDCl_3$): 10,03 (CHO), 7,65 (Pyridin-H), 7,3 (Pyridin-H), 6,28 (=$CH_2$), 2,59 (=$CH_2$), 5,48 (-CH-OH), 4,8 (-OH), 3,92 (-O-$CH_2$-), 2,26 (-$CH_2$-$CH_3$), 0,79 (-CH-$CH_3$)

Beispiel 2: Polymer aus 1,3-Butandioldiacrylat und 1,3,5-Benzoltricarbaldehyd

Zu einer gerührten Mischung aus 1,3,5-Benzoltricarbaldehyd (61,6 mg, 0,38 mmol) und 1,3-Butandioldiacrylat (177,12 μL, 0,38 mmol) wurden Chinuclidin (130 mg) und Methanol (60 μL) hinzugefügt. Danach wurden 2 mL DMF als Lösungsvermittler zugegeben. Das homogene Reaktionsgemisch wurde bei Raumtemperatur (23°C) gerührt und der Reaktionsfortschritt per $^1$H-NMR und GPC verfolgt. Nach 24h wurde das Reaktionsgemisch mit Chloroform verdünnt und gewaschen zunächst mit gesättigter NaH-$CO_3$- Lösung und anschließend mit gesättigter Kochsalzlösung. Nach Trocknen der Chlorformphase über $Na_2SO_4$ wurde das Lösungsmittel unter vermindertem Druck entfernt und das Endprodukt erhalten.

Das erfindungsgemäße Produkt wies folgende Kennzahlen auf:

GPC (DMF): Mn: 3500 Da, Mw: 6400 Da,
$^1$H-NMR (400 MHz, DMSO-d6): 9,94 (CHO), 8,31 (CH in Phenyl), 8,11 (CH in Phenyl), 7,68 (CH in Phenyl), 7,55 (CH in Phenyl), 7,08 (CH in Phenyl), 6,21 (=$CH_2$), 5,92 (=$CH_2$), 5,47 (-CH-OH), 4,87 (-CH-$CH_3$), 4,77 (-OH), 3,99 (-O-$CH_2$-$CH_2$-), 1,81 (-O-$CH_2$-$CH_2$-), 1,22(-CH-$CH_3$)

Beispiel 3: Polymer aus Trimethylolpropantriacrylat und Terephthalaldehyd

In einem 250ml Vierhalskolben, ausgestattet mit Rührer, Rückflusskühler, Innenthermometer und Tropftrichter werden 13,4 g Terephthalaldehyd, 38,5 g Trimethylolpropantriacrylat (Laromer® TMPTA, BASF SE) und 2,9 g Diazabicyclooctan (DABCO) vorgelegt und unter Rühren auf 80°C erwärmt. Nach 3h Rühren bei 80°C wird das Reaktionsgemisch zunehmend viskoser. Nun werden 55 g 2-Butanon zugegeben und weitergerührt bis eine homogene Lösung entstanden ist.

Anschließend wird die Lösung in einen 250 ml Erlenmeyerkolben überführt, auf Raumtemperatur abgekühlt und 13,8 g Amberlite® IR-120 (saurer Ionentauscher) zugesetzt.

Nun wird die Mischung 20 min mittels Magnetrührer gerührt. Eine anschließende Kontrolle des pH-Wertes nach Mischung eines kleinen Teils der Lösung mit Wasser ergab einen Wert von 6. Nun wurde der Ionenaustauscher über ein Faltenfilter von dem Rest der Lösung abgetrennt, mit 10 ml 2-Butanon gewaschen und die gesammelten Filtrate am Rotationsverdampfer bei 60°C und einem Druck von 8 mbar vom Lösemittel befreit. Erhalten wurde ein honigfarbenes Polymer mit folgenden Kennzahlen:
GPC (THF) Mn: 660 Da Mw: 1030 Da

Beispiel 4: Polymer aus Trimethylolpropantriacrylat und Terephthalaldehyd

In einem 2 l Vierhalskolben, ausgestattet mit Rührer, Rückflusskühler, Innenthermometer und Tropftrichter werden 241,4 g Terephthalaldehyd, 639,4 g Trimethylolpropantriacrylat (Laromer® TMPTA, BASF SE) und 52,6 g Diazabicyclooctan (DABCO) vorgelegt und unter Rühren auf 80°C erwärmt. Nach 5h Rühren bei 80°C wird das Reaktionsgemisch zunehmend viskoser. Nun werden 800 g 2-Butanon zugegeben und weitergerührt bis eine homogene Lösung entstanden ist.

Anschließend wird die Lösung in einen 5 l Erlenmeyerkolben überführt, auf Raumtemperatur abgekühlt, mit weiteren 140 g 2-Butanon verdünnt und unter Rühren mittels Magnetrührer portionsweise 260 g Amberlite® IR-120 (saurer Ionentauscher) zugesetzt. Nun wird die Mischung nochmals 20 min gerührt. Eine anschließende Kontrolle des pH-Wertes nach Mischung eines kleinen Teils der Lösung mit Wasser ergab einen Wert von 5. Nun wurde der Ionenaustauscher über ein Faltenfilter von dem Rest der Lösung abgetrennt und das Filtrat am Rotationsverdampfer bei 60°C und einem Druck von 8 mbar vom Lösemittel befreit. Erhalten wurde ein honigfarbenes Polymer mit folgenden Kennzahlen:
GPC (THF) Mn: 780 Da Mw: 1900 Da
Tg = -3,5°C

## Patentansprüche

1. Hydroxygruppen und Acrylatgruppen aufweisende verzweigte Polymere (S), erhältlich durch Reaktion mindestens einer Carbonylverbindung (A), ausgewählt aus der Gruppe bestehend aus

    - Carbonylverbindungen (Ax) mit mehr als zwei Carbonylgruppen und,
    - Dicarbonylverbindungen (A2) mit genau zwei Carbonylgruppen, wobei die Carbonylgruppen sowohl in (A2) als auch in (Ax) jeweils unabhängig voneinander ausgewählt sind aus der Gruppe bestehend aus

        - - Aldehydgruppen und
        - - Ketogruppen

    und
    mindestens einer Acrylatverbindung (B), ausgewählt aus der Gruppe bestehend aus
    - Acrylatverbindungen (By) mit mehr als zwei Acrylatgruppen und,
    - Diacrylatverbindungen (B2),

    mit der Maßgabe, daß die mittlere Funktionalität der Carbonylgruppen-enthaltenden Verbindungen (A) und/oder die mittlere Funktionalität der Acrylatgruppen-enthaltenden Verbindungen (B) mehr als 2 beträgt.

2. Polymere gemäß Anspruch 1, **dadurch gekennzeichnet, daß** man mindestens eine Verbindung (By) in Gegenwart mindestens einer Verbindung (A2) umsetzt.

3. Polymere gemäß Anspruch 1, **dadurch gekennzeichnet, daß** man mindestens eine Verbindung (By) in Gegenwart mindestens einer Verbindung (A2) sowie mindestens einer Verbindung (B2) umsetzt.

4. Polymere gemäß einem der vorstehenden Ansprüche, **dadurch gekennzeichnet, daß** die Verbindungen (Ax) und soweit vorhanden (A2) ausschließlich Aldehydgruppen tragen.

5. Polymere gemäß einem der vorstehenden Ansprüche, **dadurch gekennzeichnet, daß** die Verbindungen (Ax) ausgewählt sind aus der Gruppe bestehend aus 1,2,3-, 1,2,4- oder 1,3,5-Benzoltrialdehyd und 2,4,6-Pyridintrialdehyd.

6. Polymere gemäß einem der vorstehenden Ansprüche, **dadurch gekennzeichnet, daß** die Verbindungen (A2), soweit sie anwesend ist, ausgewählt ist aus der Gruppe bestehend aus Glyoxal, Succinaldehyd, Glutaraldehyd, Capronaldehyd, Furan-2,5-dialdehyd, Pyrrol-2,5-dialdehyd, Pyridin-2,6-dialdehyd, Phthalaldehyd, Isophthalaldehyd und Terephthalaldehyd.

7. Polymere gemäß einem der vorstehenden Ansprüche, **dadurch gekennzeichnet, daß** die Verbindungen (By) ausgewählt sind aus der Gruppe bestehend aus Polyetheracrylaten, Polyesteracrylaten, acrylierten Polyacrylatolen, Urethanacrylaten und Acrylsäureestern von optional alkoxylierten Polyolen.

8. Polymere gemäß einem der vorstehenden Ansprüche, **dadurch gekennzeichnet, daß** es sich bei den Verbindungen (By) um Acrylsäureester von optional alkoxylierten Polyolen der Formeln (IIa) bis (IIc) handelt,

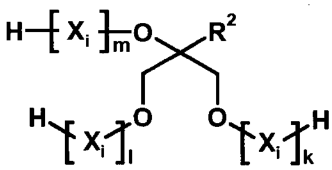

(IIa)

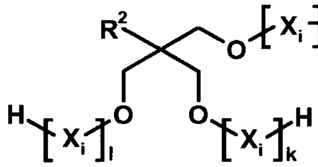

(IIb)

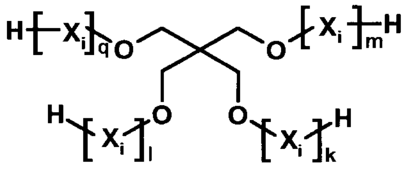

(IIc)

worin
$R^2$ Wasserstoff oder $C_1$ - $C_{18}$-Alkyl,
k, l, m, q unabhängig voneinander je für eine ganze Zahl von 0 bis 10, bevorzugt 0 bis 5, besonders bevorzugt 0 bis 3, ganz besonders bevorzugt für 0 bis 2, insbesondere für 0 oder 1 und speziell für 0 steht und
jedes $X_i$ für i = 1 bis k, 1 bis l, 1 bis m und 1 bis q unabhängig voneinander ausgewählt sein kann aus der Gruppe $-CH_2-CH_2-O-$, $-CH_2-CH(CH_3)-O-$,$-CH(CH_3)-CH_2-O-$, $-CH_2-C(CH_3)_2-O-$, $-C(CH_3)_2-CH_2-O-$, $-CH_2$-CHVin-O-,-CHVin-$CH_2$-O-, $-CH_2$-CHPh-O- und -CH Ph-$CH_2$-O-, bevorzugt aus der Gruppe $-CH_2-CH_2-O-$, $-CH_2-CH(CH_3)-O-$ und $-CH(CH_3)-CH_2-O-$, und besonders bevorzugt $-CH_2-CH_2-O-$,
worin Ph für Phenyl und Vin für Vinyl steht.

9. Polymere gemäß einem der vorstehenden Ansprüche, **dadurch gekennzeichnet, daß** die Verbindungen (By) ausgewählt sind aus der Gruppe bestehend aus Trimethylolpropantriacrylat, Pentaerythrittetraacrylat, Glycerintriacrylat, Triacrylat von ein- bis zwanzigfach ethoxyliertem Trimethylolpropan und Triacrylat von ein- bis zwanzigfach ethoxyliertem Glycerin.

10. Verfahren zur Herstellung von Polymeren gemäß Anspruch 1, **dadurch gekennzeichnet, daß** man mindestens eine Carbonylverbindung (A), ausgewählt aus der Gruppe bestehend aus

- Carbonylverbindungen (Ax) mit mehr als zwei Carbonylgruppen und,
- Dicarbonylverbindungen (A2) mit genau zwei Carbonylgruppen, wobei die Carbonylgruppen sowohl in (A2) als auch in (Ax) jeweils unabhängig voneinander ausgewählt sind aus der Gruppe bestehend aus

  - - Aldehydgruppen und
  - - Ketogruppen

und
mindestens einer Acrylatverbindung (B), ausgewählt aus der Gruppe bestehend aus
- Acrylatverbindungen (By) mit mehr als zwei Acrylatgruppen und,
- Diacrylatverbindungen (B2),

bei einer Temperatur zwischen 0 °C und 100 °C und in Gegenwart mindestens eines tertiären Amins oder Phosphins in einer Stöchiometrie zwischen Acrylatgruppen und Carbonylverbindungen von 1 : 0,05 - 1,5, optional in Gegenwart mindestens eines Lösungsmittels miteinander umsetzt,
mit der Maßgabe, daß die mittlere Funktionalität der Carbonylgruppen-enthaltenden Verbindungen (A) und/oder die mittlere Funktionalität der Acrylatgruppen-enthaltenden Verbindungen (B) mehr als 2 beträgt.

11. Verwendung der Polymere gemäß einem der Ansprüche 1 bis 10 als polymerisierbare Komponente in Zusammensetzungen, die über radikalisch initiierte Polymerisation polymerisieren.

12. Verwendung der Polymere gemäß einem der Ansprüche 1 bis 10 in Beschichtungsmassen für Multi-Cure Anwendungen.

## Claims

1. A branched polymer (S) which contains hydroxyl groups and acrylate groups and is obtainable by reacting at least one carbonyl compound (A) selected from the group consisting of

- carbonyl compounds (Ax) having more than two carbonyl groups and
- dicarbonyl compounds (A2) having just two carbonyl groups, the carbonyl groups both in (A2) and in (Ax) being selected in each case independently of one another from the group consisting of

  - - aldehyde groups and
  - - keto groups

and
at least one acrylate compound (B) selected from the group consisting of
- acrylate compounds (By) having more than two acrylate groups and,
- diacrylate compounds (B2),

with the proviso that the average functionality of the carbonyl-group-comprising compounds (A) and/or the average functionality of the acrylate-group-comprising compounds (B) is more than 2.

**2.** The polymer according to claim 1, wherein at least one compound (By) is reacted in the presence of at least one compound (A2).

**3.** The polymer according to claim 1, wherein at least one compound (By) is reacted in the presence of at least one compound (A2) and also at least one compound (B2).

**4.** The polymer according to any of the preceding claims, wherein the compounds (Ax) and, where present, (A2) carry exclusively aldehyde groups.

**5.** The polymer according to any of the preceding claims, wherein the compounds (Ax) are selected from the group consisting of 1,2,3-, 1,2,4- or 1,3,5-benzenetrialdehyde and 2,4,6-pyridinetrialdehyde.

**6.** The polymer according to any of the preceding claims, wherein the compounds (A2), where present, are selected from the group consisting of glyoxal, succinaldehyde, glutaraldehyde, caproaldehyde, furan-2,5-dialdehyde, pyrrole-2,5-dialdehyde, pyridin-2,6-dialdehyde, phthalaldehyde, isophthalaldehyde and terephthalaldehyde.

**7.** The polymer according to any of the preceding claims, wherein the compounds (By) are selected from the group consisting of polyether acrylates, polyester acrylates, acrylated polyacrylateols, urethane acrylates, and acrylic esters of optionally alkoxylated polyols.

**8.** The polymer according to any of the preceding claims, wherein the compounds (By) are acrylic esters of optionally alkoxylated polyols of the formulae (IIa) to (IIc)

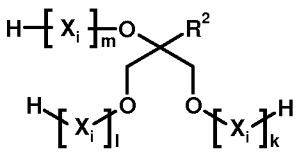

(IIa)

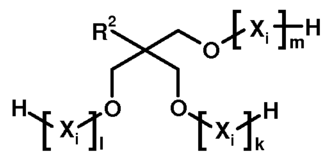

(IIb)

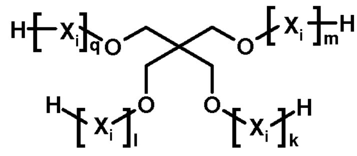

(IIc)

in which
$R^2$ is hydrogen or $C_1$-$C_{18}$-alkyl,
k, l, m, and q independently of one another are each an integer from 0 to 10, preferably 0 to 5, more preferably 0 to 3, very preferably 0 to 2, more particularly 0 or 1, and especially 0, and
each $X_i$ for i = 1 to k, 1 to l, 1 to m, and 1 to q may be selected, independently of the others, from the group $-CH_2-CH_2-O-$, $-CH_2-CH(CH_3)-O-$, $-CH(CH_3)-CH_2-0-$, $-CH_2-C(CH_3)_2-O-$, $-C(CH_3)_2-CH_2-O-$, $-CH_2$-CHVin-O-, -CHVin-$CH_2$-O-, $-CH_2$-CHPh-O- and -CH Ph-$CH_2$-O-, preferably from the group $-CH_2-CH_2-O-$, $-CH_2-CH(CH_3)-0-$ and $-CH(CH_3)-CH_2-O-$, and more preferably $-CH_2-CH_2-O-$,
in which Ph is phenyl and Vin is vinyl.

9. The polymer according to any of the preceding claims, wherein the compounds (By) are selected from the group consisting of trimethylolpropane triacrylate, pentaerythritol tetraacrylate, glyceryl triacrylate, triacrylate of singly to vigintuply ethoxylated trimethylolpropane, and triacrylate of singly to vigintuply ethoxylated glycerol.

10. A process for preparing a polymer according to claim 1, which comprises reacting at least one carbonyl compound (A) selected from the group consisting of

- carbonyl compounds (Ax) having more than two carbonyl groups and,
- dicarbonyl compounds (A2) having just two carbonyl groups, the carbonyl groups both in (A2) and in (Ax) being selected in each case independently of one another from the group consisting of

- - aldehyde groups and
- - keto groups

and
at least one acrylate compound (B) selected from the group consisting of
- acrylate compounds (By) having more than two acrylate groups and,
- diacrylate compounds (B2),

at a temperature between 0°C and 100°C and in the presence of at least one tertiary amine or phosphine, in a stoichiometry between acrylate groups and carbonyl compounds of 1 : 0.05-1.5, optionally in the presence of at least one solvent,
with the proviso that the average functionality of the carbonyl-group-comprising compounds (A) and/or the average functionality of the acrylate-group-comprising compounds (B) is more than 2.

11. The use of a polymer according to any of claims 1 to 10 as a polymerizable component in a composition which polymerizes via free-radically initiated polymerization.

12. The use of a polymer according to any of claims 1 to 10 in a coating material for a multi-cure application.

**Revendications**

1. Polymères (S) ramifiés présentant des groupes hydroxy et des groupes acrylate, pouvant être obtenus par réaction d'au moins un composé carbonyle (A), choisi dans le groupe constitué par

- les composés carbonyle (Ax) présentant plus de deux groupes carbonyle et
- les composés dicarbonyle (A2) présentant exactement deux groupes carbonyle, les groupes carbonyle, tant dans (A2) que dans (Ax) étant choisis, à chaque fois indépendamment les uns des autres, dans le groupe constitué par
- les groupes aldéhyde et
- les groupes céto
et
d'au moins un composé acrylate (B), choisi dans le groupe constitué par
- les composés acrylate (By) présentant plus de deux groupes acrylate et
- les composés diacrylate (B2),
à condition que la fonctionnalité moyenne des composés contenant des groupes carbonyle (A) et/ou la fonctionnalité moyenne des composés contenant des groupes acrylate (B) soi(en)t supérieure(s) à 2.

2. Polymères selon la revendication 1, **caractérisés en ce qu'**on transforme au moins un composé (By) en présence d'au moins un composé (A2).

3. Polymères selon la revendication 1, **caractérisés en ce qu'**on transforme au moins un composé (By) en présence d'au moins un composé (A2) ainsi que d'au moins un composé (B2).

4. Polymères selon l'une quelconque des revendications précédentes, **caractérisés en ce que** les composés (Ax) et, s'ils sont présents, (A2) portent exclusivement des groupes aldéhyde.

5. Polymères selon l'une quelconque des revendications précédentes, **caractérisés en ce que** les composés (Ax) sont choisis dans le groupe constitué par le 1,2,3-benzènetrialdéhyde, le 1,2,4-benzènetrialdéhyde ou le 1,3,5-benzènetrialdéhyde et le 2,4,6-pyridinetrialdéhyde.

6. Polymères selon l'une quelconque des revendications précédentes, **caractérisés en ce que** les composés (A2), pour autant qu'il soit présent, est choisi dans le groupe constitué par le glyoxal, l'aldéhyde succinique, le glutaraldéhyde, l'aldéhyde caproïque, le furanne-2,5-dialdéhyde, le pyrrole-2,5-dialdéhyde, le pyridine-2,6-dialdéhyde, l'aldéhyde phtalique, l'aldéhyde isophtalique et l'aldéhyde téréphtalique.

7. Polymères selon l'une quelconque des revendications précédentes, **caractérisés en ce que** les composés (By) sont choisis dans le groupe constitué par les polyétheracrylates, les polyesteracrylates, les polyacrylate-ols acrylés, les uréthane-acrylates et les esters de l'acide acrylique de polyols éventuellement alcoxylés.

8. Polymères selon l'une quelconque des revendications précédentes, **caractérisés en ce qu'**il s'agit, pour les composés (By), d'esters de l'acide acrylique de polyols éventuellement alcoxylés des formules (IIa) à (IIc)

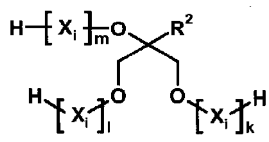

(IIa)

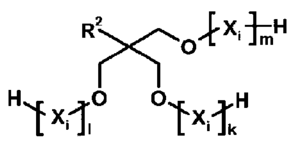

(IIb)

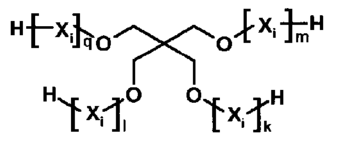

(IIc)

où
$R^2$ représente hydrogène ou $C_1$-$C_{18}$-alkyle ;
k, 1, m, qreprésentent, indépendamment les uns des autres, à chaque fois un nombre entier de 0 à 10, de préférence de 0 à 5, de manière particulièrement préférée de 0 à 3, de manière tout particulièrement préférée de 0 à 2, en particulier 0 ou 1 et particulièrement 0 et
chaque $X_i$, pour i = 1 à k, 1 à 1, 1 à m et 1 à q, peut être choisi, indépendamment les uns des autres, dans le groupe formé par $-CH_2-CH_2-O-$, $-CH_2-CH(CH_3)-O-$, $-CH(CH_3)-CH_2-O-$, $-CH_2-C(CH_3)_2-O-$, $-C(CH_3)_2-CH_2-O-$, $-CH_2$-CHVin-O-, -CHVin-$CH_2$-O-, $-CH_2$-CHPh-0- et -CH Ph-$CH_2$-O-, de préférence dans le groupe formé par $-CH_2-CH_2-O-$, $-CH_2-CH(CH_3)-O-$ et $-CH(CH_3)-CH_2-O-$, et est de manière particulièrement préférée $-CH_2-CH_2-O-$,
où Ph représente phényle et Vin représente vinyle.

9. Polymères selon l'une quelconque des revendications précédentes, **caractérisés en ce que** les composés (By) sont choisis dans le groupe constitué par le triacrylate de triméthylolpropane, le tétraacrylate de pentaérythritol, le triacrylate de glycérol, le triacrylate de triméthylolpropane éthoxylé une à vingt fois et le triacrylate de glycérol éthoxylé une à vingt fois.

10. Procédé pour la préparation de polymères selon la revendication 1, **caractérisé en ce qu'**on transforme, l'un avec l'autre, au moins un composé carbonyle (A), choisi dans le groupe constitué par

- les composés carbonyle (Ax) présentant plus de deux groupes carbonyle et
- les composés dicarbonyle (A2) présentant exactement deux groupes carbonyle, les groupes carbonyle, tant dans (A2) que dans (Ax) étant choisis, à chaque fois indépendamment les uns des autres, dans le groupe constitué par
- les groupes aldéhyde et
- les groupes céto

et
d'au moins un composé acrylate (B), choisi dans le groupe constitué par
- les composés acrylate (By) présentant plus de deux groupes acrylate et
- les composés diacrylate (B2),

à une température entre 0°C et 100°C et en présence d'au moins une amine tertiaire ou phosphine dans une stoechiométrie entre les groupes acrylate et les composés carbonyle de 1:0,05-1,5, éventuellement en présence d'au moins un solvant,
à condition que la fonctionnalité moyenne des composés contenant des groupes carbonyle (A) et/ou la fonctionnalité moyenne des composés contenant des groupes acrylate (B) soit supérieure à 2.

**11.** Utilisation des polymères selon l'une quelconque des revendications 1 à 10 comme composant polymérisable dans des compositions qui polymérisent via une polymérisation initiée par voie radicalaire.

**12.** Utilisation des polymères selon l'une quelconque des revendications 1 à 10 dans des masses de revêtement pour les applications de multidurcissement.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 5380901 A
- WO 200557286 A
- US 2007135556 A
- US 20090018300 A
- WO 2011006947 A
- WO 9828252 A
- WO 2006005491 A1
- US 20060009589 A1
- US 5770650 A
- DE 19957900 A1


### In der Beschreibung aufgeführte Nicht-Patentliteratur


- **P. VENKITASUBRAMANIAN ; E. C. HAGBERG ; P. D. BLOOM.** *Polymer Preprints,* 2008, vol. 49 (1), 914-915
- Polymer Handbook. Wiley & Sons
- **H. FREY et al.** *Acta Polym.,* 1997, vol. 48, 30-35
- **Z.W. WICKS.** *Prog. Org. Coat.,* 1975, vol. 3, 73-99
- *Prog. Org. Coat,* 1981, vol. 9, 3-28
- **HOUBEN-WEYL.** Methoden der Organischen Chemie. Georg Thieme Verlag, 1963, vol. XIV/2, 61 ff